(19) Europäisches Patentamt
European Patent Office
Office européen des brevets

(11) EP 4 528 340 A1

(12) **EUROPEAN PATENT APPLICATION**

(43) Date of publication:
**26.03.2025 Bulletin 2025/13**

(21) Application number: **23306584.6**

(22) Date of filing: **22.09.2023**

(51) International Patent Classification (IPC):
***G02B 1/115*** *(2015.01)* ***G02B 5/08*** *(2006.01)*
***G02B 5/28*** *(2006.01)*

(52) Cooperative Patent Classification (CPC):
**G02B 1/115; G02B 5/0891; G02B 5/283; G02B 5/285**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Essilor International**
**94220 Charenton-Le-Pont (FR)**

(72) Inventors:
- **DING, Xingzhao**
**120425 Singapore (SG)**
- **PELAYO, Andrew**
**339346 Singapore (SG)**

(74) Representative: **Jacobacci Coralis Harle**
**32, rue de l'Arcade**
**75008 Paris (FR)**

(54) **OPTICAL ARTICLE HAVING A VERY HIGH REFLECTIVE COATING IN THE 350-380 UV BAND**

(57) The invention relates to an optical article (OA), having a front main face and a rear main face, comprising at least: one base element having a front main surface and a rear main surface, at least one front interferential coating, defined as IC1, deposited to the front main surface of the base element, and at least one back interferential coating, defined as IC2, deposited to the rear main surface of the base element having a mean reflection factor $Ruv_{(IC2)}$ in the UV region ranges from 280 to 380 nm that is lower than 5% for an angle of incidence of 35°,
characterized in that
- IC1 comprises a front main face having a mean reflection factor $Ruv^{350-380}_{(IC1)}$ in the UV region ranges from 350 to 380 nm for an angle of incidence within the range of from 0° to 15°, and preferably of 0°, is higher than or equal to 75% and the optical article has:
- a mean transmission factor in the region ranging from 350 to 380 nm, defined as $Tuv^{350-380}_{(OA)}$ at an angle of incidence of 0° that is lower than or equal to 2%,
- a transmission factor at 380 nm, defined as $T^{380}_{(OA)}$, at an angle of incidence of 0° that is lower than or equal to 8%.

Fig.7

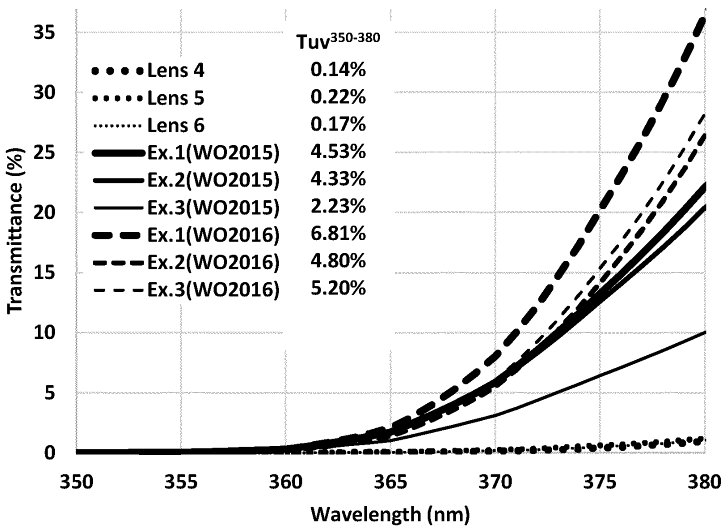




Processed by Luminess, 75001 PARIS (FR)

## Description

### TECHNICAL FIELD OF THE INVENTION

The invention relates to an optical article comprising a base element, such as a substrate, having a front main face and a rear main face, the front main face being coated on its front face with a multilayer interference coating. The multilayer interference coating is able to and/or configured to provide a very strong reflection of the ultraviolet range especially between 350-380 nm. Consequently, the front multilayer interference coating allows the transmission of ultraviolet light through the optical article to be decreased.

The optical article may especially be an ophthalmic lens, in particular a spectacle lens.

### BACKGROUND INFORMATION AND PRIOR ART

The solar spectrum is composed of electromagnetic radiation of various wavelengths and in particular of ultraviolet (UV) rays. The UV spectrum includes a number of bands, in particular the UVA, UVB and UVC bands. Among the UV bands that reach the surface of the Earth, the UVA band, comprised between 315 nm and 380 nm, and the UVB band, comprised between 280 nm and 315 nm, are particularly harmful to the eye. These bands are in particular responsible for accelerated ocular aging, which can lead to early cataracts or even to more extreme phenomena such as photokeratitis or "snow blindness". The UV protection level of an ophthalmic lens is considered to be inadequate when the ophthalmic lens lets pass more than 1% of wavelengths between 280 nm and 380 nm.

However, certain of the materials commonly used as optical article substrates have good performances against the UV ranging from 280 to 350 nm, but let some of the ultraviolet light between 350 nm to 380 nm pass. In general, this kind of materials has a low refractive index, such as lower than 1.59 and may correspond especially to the materials obtained by (co)polymerization of di(ethylene glycol) bis(allyl carbonate). Such materials for example are sold under the trade name CR-39® by the company PPG Industries (ESSILOR ORMA® lenses). Indeed, ORMA® substrate is the first generation of plastic material and is now still widely used for manufacturing ophthalmic lenses.

Table 1 below presents examples of the mean reflection factor in the UV band ranging from 280 to 380 nm (Ruv), the mean transmission factor $Tuv^{280\text{-}380}$ and the ESPF ("Eye Sun Protection Factor"), for bare substrates having various indices for an angle of incidence of 0°.

*Table 1*

| Refractive index | Ruv (%) | Tuv (%) | ESPF | ESPF class |
|---|---|---|---|---|
| 1.50 | 4.30 | 2.02 | 15.82 | 15 |
| 1.60 | 5.98 | 0 | 16.73 | 15 |
| 1.67 | 7.11 | 0 | 14.06 | 10 |

This table1 shows that the lower the refractive index, the lower the Ruv and the higher the Tuv transmission. In addition, from a UV protection point of view, it is preferable for glasses to have an ESPF of a class greater than 25 and preferentially greater than 30.

Especially, bare ORMA® substrates (refractive index of 1.5 at a wavelength of 550 nm) have a UV mean transmission factor of around 2.02 % at an angle of incidence of 0° and a mean reflection factor $Ruv^{280\text{-}380}$ of around 4.30 % at an angle of incidence of 0°). It is also known that this material especially allows ultraviolet light to pass from 350 to 380 nm, so it has a very limited UV protection with an UV cut-off (i.e.: the longest wavelength at which the lens blocks at least 99% of the UV light) around 360 nm. In addition, this kind of substrate has an ESPF of around 16. Therefore, this ORMA® substrate has a lower UV protection than other substrates having a higher refractive index, such as MR®8 substrate (material available from Mitsui Chemicals) having a refractive index of 1.6 and MR®7 substrate (material available from Mitsui Chemicals) having a refractive index of 1.67.

In order to prevent the ocular damage caused by the UV rays, various solutions have been proposed in the prior art.

A first solution, such as describes in the document FR 2 968 774, consists in decreasing reflection in the UV spectrum by coating the back face of a lens substrate with a multilayer antireflection coating.

Another solution allowing a UV-blocking ophthalmic lens to be obtained is to decrease transmission in the UV ( $T_{UV}^{0°}(\%)$ ), for example by integrating UV absorbers into the ophthalmic lens. The UV absorber may be incorporated into the bulk of the lens, during the polymerization of the monomers forming the material of the lens, or be placed on the surface of the latter, by dipping the lens into (or imbibing the lens in) a bath containing the UV absorber. However, incorporation of a UV absorber into a lens is generally accompanied by an undesirable yellowing of the latter, which may be overcome by combining the UV absorber with a specific dye.

Another known prior-art solution allowing transmission $T_{UV}^{0°}(\%)$ to be decreased consists in coating the substrate with an antireflection stack that rejects ultraviolet rays.

The document WO 2016/102857 aims at providing a suitable multilayer interference stack that is able to decrease the amount of UV passing through substrates, and in particular for ORMA® substrates, without however reflecting the visible light and without causing yellowing of the lens (i.e.: the reflectance at 400 nm is relatively low). For that purpose, this document discloses a transparent ophthalmic lens comprising a substrate having a front main face and a back main face, the front main face being coated with a multilayer interference coating comprising a stack of at least one layer having a refractive index higher than 1.6, called the high-refractive-index layer (or HI layer), and of at least one layer having a refractive index lower than 1.55, called the low-refractive-index layer (or LI layer), and which does not contain titanium, wherein:

- the average reflectance of the coated front main face of said ophthalmic lens, between 350-380 nm (defined as $Ruv^{(350-380)}$) weighted by the function W(λ), is higher than or equal to 35%, preferably higher than or equal to 50%, and is in particular ranged from 43 to 62% for at least one angle of incidence comprised between 0° and 17°; and
- the light reflectance at 400 nm (defined as $R^{400}$) of the coated front main face of said ophthalmic lens is lower than or equal to 35%, preferably lower than or equal to 15% for at least one angle of incidence comprised between 0° and 17°.

Especially, this document illustrates three examples wherein the front main face of each lens (ORMA® substrate) is coated with a multilayer interference coating comprising eight layers of alternating HI layer (i.e.: $ZrO_2$) and LI layer (i.e.: $SiO_2$) and one electrically conductive layer of ITO (indium tin oxide). Table 4 indicates that, at an angle of incidence of 0°, the mean reflection factor in the visible range (i.e.: 380-780), defined as Rv is low and ranges from 0.70% to 0.88%, $Ruv^{(280-380)}$ is high and ranges from 65.4% to 69.5%, $Ruv^{(350-380)}$ is high and ranges from 43% to 62% (Ex.2) and the transmission in the UV ranges Tuv is low and is ranged from 1.18% to 1.34%. (as indicated in this document, this Tuv was only calculated from the $Ruv^{280-380}$ of ORMA® bare substrate, i.e.: 3.87%).

However, the Applicant has discovered that, even if the front multilayer interference coating discloses in this document is able to provide suitable optical characteristics to the lens when it is used alone, these optical characteristics are not enough satisfying when it is combined with a standard anti-UV multilayer interference coating having a Ruv lower than 5% for an angle of incidence of 35°disposed on the rear main face of the lens. This kind of rear coating is commonly used to protect the eyes of the spectacles wearer from light rays that may reflect onto the lens rear face at oblique incidence (i.e.: from 30 to 45°). Indeed, and as it will be shown in the experimental part below, in this configuration, the UV cut-off is only about 363-364 nm (i.e.: far from 380 nm) and the transmittance at a wavelength of 380 nm, $T^{380}$, is high and ranged from 26% to 37%. Hence, in this configuration, the UV protection is not enough efficient, and this is all the more problematic when the substrate used has a refractive index below 1.50, such as the widely used ORMA® substrate having a UV cut-off at 360 nm and that allows ultraviolet light to pass from 350 to 380 nm such as explained above. In addition, tables 4 and 6 of this document describes $Tuv^{280-380}$ values which are of the same and calculated (rather than measured) by 3.87%(1-Ruv), here 3.87% is the UV transmittance of ORMA® bare substrate. Thus, the Tuv values in these tables did not take account of UV reflection on the front surface (Cc) and rear surface (Cx) of the tested lenses. Consequently, the results indicated on this table 6 of this document are different from the results described in the experimental part below.

The document WO 2015/040184 describes a specific interference coating design which reflects the wavelengths in the UV range so as to provide a gradient photochromic tint. According to the examples, the lenses (ORMA® substrates) that are coated with this specific interference coating onto their front main face (i.e.: convex face) have a mean reflectance factor between 330-380 nm ranging from 50% to 79%. However, here again, the Applicant discovers that when a standard UV multilayer interference coating is also applied onto the rear main face (i.e.: concave face) of these lenses, the UV cut-off (i.e.: T%≈1%) is only around 363-365 nm and the transmittance at 380 nm ($T^{380}$) is high and about 10%. The Applicant has also discovered that the reflection peak of the illustrated lenses (Ex.1 to Ex.3) of this document extends to 480 nm and their total backward reflection of harmful blue light ($Rm^{B1}$ within a wavelength range of from 420 to 450 nm) at 35° is undesirably high, such as of 27.64% for Ex.3).

Hence, an object of the current invention is thus to propose a new optical article which avoids, at least in part, the aforementioned drawbacks.

In particular, the objective of the present invention is to provide a transparent optical article, especially an ophthalmic lens, that comprises a base element such as a substrate made of mineral or organic glass including, on its rear main face, a standard UV reflection coating having a mean reflection factor in the UV region ranges from 280 to 380 nm that is lower than 5% for an angle of incidence of 35° that is able or configured to provide, on its front main face, a very high reflectivity in the UV band ranging from 350 nm to 380 nm, and at the same time, having preferably suitable performance in the visible domain and being easy to produce industrially.

In particular, an object of the current invention is to provide a novel anti-UV multilayered interference coating on a front main face of an optical article, that is able, combined with a standard UV interference coating (different from said front interference coating) disposed on the rear main face of the optical article to decrease the transmission of ultraviolet light, especially in the 350-380 UV range.

## SUMMARY OF THE INVENTION

The Applicant sought to develop a new optical article having a very high reflectivity on its front face, especially when the optical article already includes a standard UV reflection coating, and this so as to prevent the ocular damage caused by these UV rays, especially, but not dedicated specifically for a base element having a refractive index which is lower than 1.59 and/or has a mean transmission factor in the region ranging from 350 to 380 nm that is higher than 0.0004% at an angle of incidence of 0°. In general, the base element is a substrate selected from materials obtained by (co) polymerization of di(ethylene glycol) bis(allyl carbonate) and corresponds for instance ORMA® substrate.

For that purpose, the invention refers to an optical article, defined as OA, having a front main face and a rear main face, comprising at least:

one base element having a front main surface and a rear main surface,

at least one front interferential coating, defined as IC1, deposited to the front main surface of the base element comprising at least one layer having a low refractive index which is lower than 1.55, defined as "LI layer", and at least one layer having a high refractive index which is equal to or higher than 1.55, defined as "HI layer", and

at least one back interferential coating, defined as IC2, deposited to the rear main surface of the base element comprising at least one layer having a low refractive index which is lower than 1.55, defined as "LI layer", and at least one layer having a high refractive index which is equal to or higher than 1.55, defined as "HI layer", said IC2 has a mean reflection factor $Ruv_{(IC2)}$ in the UV region ranges from 280 to 380 nm that is lower than 5%, for an angle of incidence of 35°,

characterized in that:

- IC1 comprises a front main face having a mean reflection factor $Ruv^{350\text{-}380}_{(IC1)}$ in the UV region ranges from 350 to 380 nm for an angle of incidence within the range of from 0° to 15°, and preferably of 0°, is higher than or equal to 75% **(*** note: characteristic of IC1 alone, i.e.: without IC2***),**

and the optical article has:

- a mean transmission factor in the region ranging from 350 to 380 nm, defined as $Tuv^{350\text{-}380}_{(OA)}$ at an angle of incidence of 0° that is lower than or equal to 2%,
- a transmission factor at 380 nm, defined as $T^{380}_{(OA)}$, at an angle of incidence of 0° that is lower than or equal to 8%.

## BRIEF DESCRIPTION OF THE DRAWINGS

For a more complete understanding of the description provided herein and the advantages thereof, reference is now made to the brief descriptions below, taken in connection with the accompanying drawings and detailed description.

FIG.1 shows a graph illustrating the variation in the reflectance R in percent (R %) of a lens (lens 1) comprising a substrate (ORMAO substrate) coated on its front main face with IC1 having the structure of a first example (Ex.A) according to the invention at an angle of incidence θ of 0° and as a function of wavelengths (lambda) ;

FIG.2 shows a graph illustrating the variation in the transmittance T in percent (T %) of another lens (lens 4) according to the invention comprising a substrate (ORMAO substrate) coated, on its front main face, with IC1 having the structure of Ex.A (Fig.1) and, on its rear main face, with a standard UV refection coating, at an angle of incidence θ of 0° as a function of wavelengths (lambda) ;

FIG.3 shows a graph illustrating the variation in the reflectance R in percent (R %) of another lens (lens 2) comprising a substrate (ORMAO substrate) coated on its front main face with IC1 having the structure of a second example (Ex.B) according to the invention at an angle of incidence θ of 0° and as a function of wavelengths (lambda);

FIG.4 shows a graph illustrating the variation in the transmittance T in percent (T %) of another lens (lens 5) according to the invention comprising a substrate (ORMAO substrate) coated, on its front main face, with IC1 having the structure of Ex.B (Fig.3) and, on its rear main face, with a standard UV refection coating, at an angle of incidence θ of 0° as a function of wavelengths (lambda) ;

FIG.5 shows a graph illustrating the variation in the reflectance R in percent (R %) of another lens (lens 3) comprising a substrate (ORMAO substrate) coated on its front main face with IC1 having the structure of a third example (Ex.C) according to the invention at an angle of incidence θ of 0° and as a function of wavelengths (lambda);

FIG.6 shows a graph illustrating the variation in the transmittance T in percent (T %) of another lens (lens 6) according to the invention comprising a substrate (ORMA® substrate) coated, on its front main face, with IC1 having the structure of Ex.C (Fig.5) and, on its rear main face, with a standard UV refection coating, at an angle of incidence θ of 0° as a function of wavelengths (lambda) ;

FIG.7 shows a graph illustrating the variation in the transmittance T in percent (T %) of the optical articles (lenses 4 to 6) according to the invention as compared to optical articles comprising on its front main face the multilayered interferential coating of Ex.1 to Ex.3 of documents WO2016/102857 (prior art) or of document WO 2015/040184 (prior art) and on its rear main face, the standard UV reflection coating, at an angle of incidence θ of 0° as a function of wavelengths (lambda) ;

FIG.8 shows the mean reflection factor between 350-380 nm, defined as $Ruv^{350-380}$, weighted by the function W(λ) on the front main face of lenses 1 to 3 according to the invention (i.e.: comprising respectively, a substrate (ORMA® substrate) coated on its front main face with IC1 (Ex.A) or IC1 (Ex.B) or IC1 (Ex.C)), in comparison with Ex.2 of WO 2016/102857 (prior art) or Ex.3 of WO 2015/040184 (prior art) or Ex.3 of WO 2013/171434,; as function of the angle of incidence ranging from 0° to 60°

FIG.9 shows the mean light reflection factor in the visible domain, defined as Rv, on the front main face of lenses 1 to 3 according to the invention in comparison with Ex.2 of WO 2016/102857 (prior art) or Ex.3 of WO 2015/040184 (prior art) or Ex.3 of WO 2013/171434, as function of the angle of incidence; and

FIG.10 shows the average blue light reflection factor $Rm^{B1}$ on a rear main face of lenses 1 to 3 according to the invention in comparison with Ex.2 of WO 2016/102857 (prior art) or Ex.3 of WO 2015/040184 (prior art) or Ex.3 of WO 2013/171434, as function of the angle of incidence (θ at 30°, θ at 35°, θ at 40° and θ at 45°).

## DETAILED DESCRIPTION OF THE INVENTION

### A) Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

Also, unless otherwise indicated, the indication of an interval of values « from X to Y » or "between X to Y", according to the present invention, means as including the values of X and Y.

We mean an ophthalmic article defined by, but not exclusive of corrective lenses, non-corrective lenses, contact lenses, intra-ocular lenses, magnifying lenses, protective lenses, and visors containing photochromic compounds within a coating, the lens material, a film, or any adjacent layer.

As used herein, "a base element" can consist in an optical, such as an ophthalmic, substrate or in a support film of optical quality to be fixed on an optical/ophthalmic substrate thanks to an adhesive such as a pressure-sensitive adhesive of optical quality (PSA layer) (i.e.: laminate).In the present application, when an optical lens comprises one or more coatings onto the surface thereof, the expression "to deposit a layer or a coating onto the article" is intended to mean that a layer or a coating is deposited onto the external (exposed) surface of the outer coating of the article, that is to say its coating that is the most distant from the substrate.

Unless otherwise indicated, a coating, that is said to be "on" a substrate/base element or deposited "onto" a substrate/base element" is defined as a coating, which (i) is positioned above the substrate/base element, (ii) is not necessarily in contact with the substrate/base element, that is to say one or more intermediate coatings may be arranged between the substrate/base element and the coating in question, and (iii) does not necessarily completely cover the substrate/base element.

In a preferred embodiment, the coating on a substrate or deposited onto a substrate is in direct contact with this substrate.

When "a layer 1 is lying under a layer 2", it is intended to mean that layer 2 is more distant from the substrate than layer 1.

By outermost layer of the interferential coating, it is meant the layer of the interferential coating which is the furthest from the substrate.

By innermost layer of the interferential coating, it is meant the layer of the interferential coating which is the closest to the substrate.

By inner layer of the interferential coating, it is meant any layer of the interferential coating except for the outermost layer of said interferential coating.

Also, unless stated otherwise, all thicknesses disclosed in the present application relate to physical thicknesses.

As used herein, a layer of the interferential coating is defined as having a thickness higher than or equal to 1 nm. Thus, any layer having a thickness lower than 1 nm will not be considered when counting the number of layers in the reflective coating. A sub-layer is also not considered when counting the number of layers of the interferential coating.

Unless otherwise specified, the refractive indexes referred to in the present application are expressed at 25 °C at a wavelength of 550 nm.

As used herein, the rear (or the inner or Concave or CC) face of the base element substrate is intended to mean the face which, when using the article, is the nearest from the wearer's eye. It is generally a concave face. On the contrary, the front face of the substrate (or Convex or CX), is the face which, when using the article, is the most distant from the wearer's eye. It is generally a convex face.

Also, as used herein, a "transparent substrate" is understood to be transparent, when the observation of an image through said substrate is perceived with no significant loss of contrast, that is, when the formation of an image through said substrate is obtained without adversely affecting the quality of the image.

The colorimetric coefficients of the optical article of the invention in the international colorimetric system CIE L*a*b* (1976) (such as the Chroma C* and the hue "h") are calculated between 380 and 780 nm, taking the standard illuminant D 65 and the observer into account (angle of 10°). The observer is a "standard observer" as defined in the international colorimetric system CIE L*a*b*. Indeed, in the CIE L*a*b* space, it is possible to express not only overall variations in color, but also in relation to one or more of the parameters L*, a* and b*. This can be used to define new parameters and to relate them to the attributes of the visual sensation. Clarity, related to luminosity, is directly represented by the value of L*. Chroma: $C^* = (a^{*2} + b^{*2})^{1/2}$ defines the chromaticness. The angle of hue: h = tg-1 (b*/a*) (expressed in degrees); related to hue.

The optical characteristics comprise at least the mean light reflection factor in the visible region $R_v$ , also named the "luminous reflectance".

Herein, the "luminous reflectance" noted $R_v$, is such as defined in the ISO 13666:1998 Standard, and measured in accordance with the ISO 8980-4, i.e., this is the weighted spectral reflection average over the whole visible spectrum between 380 and 780 nm. $R_v$ is usually measured for an angle of incidence lower than 17°, typically of 15°, but can be evaluated for any angle of incidence.

According to the invention, said mean reflection factor Ruv is defined through the following relation:

$$R_{UV} = \frac{\int_{280}^{380} W(\lambda).R(\lambda).d\lambda}{\int_{280}^{380} W(\lambda).d\lambda}$$

wherein R(λ) represents the optical article spectral reflection factor at a given wavelength, and W(λ) represents a weighting function equal to the product of the solar spectrum irradiance Es(λ) and the efficiency relative spectral function S(λ).

The spectral function W(λ), enabling to calculate the ultraviolet radiation transmission factors, is defined according to the ISO 13666:1998 standard. It makes it possible to express the ultraviolet solar radiation distribution tempered by the relative spectral efficiency of such radiation for a user, since it simultaneously takes both the solar spectral energy Es(λ) into account, which does globally emit less UVB-rays as compared to UVA-rays, and the spectral efficiency S(λ), UVB-rays being more harmful than UVA-rays. The values for those three functions in the ultraviolet region are given in the table disclosed in ISO 13666:1998 standard (which is reproduced at page 6 of the publication WO 2012/076714).

The mean reflection factor Ruv is measured in the present application at an angle of incidence of 35°. Calculation examples of Ruv for angles of incidence at 30° and 45° are given in WO 2012/076714. A person skilled in the art can easily implement calculation based on reflection values measured on the respective faces at the desired incidence angle (0°, 15°, 35°).

By analogy, the mean reflection factor weighted by the function W(λ) may be defined between two wavelengths λ1 and λ2 if the equation above is rewritten and the limits of the integral set equal to the wavelengths λ1 and λ2, such as for instance λ1 equal to 350nm and λ2 equal to 380 nm, such as to obtain $Ruv^{350-380}$.

As used herein, the mean reflection factor $Rm^{B1}$ of blue light (420-450 nm) is defined by the formula:

$$R_m^{B1} = \frac{\int_{420}^{450} R(\lambda)d\lambda}{450-420}$$

wherein R(λ) represents the reflection factor at wavelength λ.

In general, $Rm^{B1}$ can be measured for any angle of incidence of 35° on the rear man face of the optical article, based on R(λ) measured at the same angle of incidence.

As used herein, the mean reflection factor $R_m^{B2}$ mentioned above is defined by the formula:

$$R_m^{B2} = \frac{\int_{465}^{495} R(\lambda)d\lambda}{495-465}$$

wherein R(λ) represents the reflection factor at a given wavelength λ. $R_m^{B2}$ is defined for a specific angle of incidence, preferably 35° (on the rear main face of the OA), based on R(λ) measured at the same angle of incidence.

According to this embodiment, the antireflection coating of the invention enables to protect from the phototoxic blue light band, while preserving at best the circadian cycles by not disturbing the chronobiologic blue light band.

As used herein, the mean reflection factor $R_m^{B3}$ mentioned above is defined by the formula:

$$R_m^{B3} = \frac{\int_{440}^{460} R(\lambda)d\lambda}{460-440}$$

wherein R(λ) represents the reflection factor at a given wavelength λ. $R_m^{B3}$ is defined for a specific angle of incidence, preferably 35° (on the rear main face of the OA), based on R(λ) measured at the same angle of incidence.

According to the invention, the mean transmission factor in the region ranging from 280 nm to 380 nm of the optical article, defined as $Tuv^{280\text{-}380}_{(OA)}$ is defined and measured in the same manner, that is to say according to the following formula in which T(λ) represents the optical article transmission factor at a given wavelength λ:

$$T_{uv}^{280\text{-}380} = \frac{\int_{280}^{380} T(\lambda)d\lambda}{380-280}$$

The mean transmission factor $Tuv^{280\text{-}380}_{(OA)}$ takes into account all means blocking light between 280 and 380 nm and is defined for a specific angle of incidence, preferably 0° (on the rear main face of the OA), based on T(λ) measured at the same angle of incidence.

According to the invention, the "transmission factor at 380 nm, defined as $T^{380}_{(OA)}$, at an angle of incidence of 0°" corresponds to the amount of UV transmitted at an angle of incidence of 0° at 380 nm.

As used herein and analogy, the mean transmission factor in the region ranging from 350 nm to 380 nm may be defined between two wavelengths λ1 and λ2 if the equation above is rewritten and the limits of the integral set equal to the wavelengths λ1 and λ2, such as for instance λ1 equal to 350nm and λ2 equal to 380 nm, such as to obtain $Tuv^{350\text{-}380}_{(OA)}$. Also, the mean transmission factor $Tuv^{350\text{-}380}_{(OA)}$ takes into account all means blocking light between 350 and 380 nm and is defined for a specific angle of incidence, preferably 0° (on the rear main face of the OA), based on T(λ) measured at the same angle of incidence.

As already mentioned, the UV-cut off correspond to the longest wavelength at which the lens blocks at least 99% of the UV light, or in other word at the wavelength at which the transmittance through the optical article s is about 1%, T≈1%).

As used herein, the maximum reflectance $R_{max}$ over the whole spectrum corresponds to the maximum reflectance value (highest value) measured on the whole spectrum ranging from 280 nm to 780 nm.

In the context of the invention, the ESPF of an ophthalmic lens is given by the following relationship: where

$$ESPF = \frac{100\%}{T_{UV}^{0°}(\%) + R_{UV}^{35°}(\%)}$$

$Tuv^{0°}$ is the amount of UV (between 280 and 380 nm) transmitted at an angle of incidence of 0° (i.e. the UV source is perpendicular to the lens), and

$Ruv^{35°}$ is the amount of UV (between 280 nm and 380 nm) reflected at an angle of incidence of 35° from the back face.

In general, ESPF is commercially divided into segments, and is broken down into six categories in the following manner (table 2):

*Table 2*

| **ESPF** | **Class** |
|---|---|
| ESPF <6.25 | Class 0 |
| ESPF 6.25-12.5 | Class 10 |
| ESPF 12.5-20 | Class 15 |
| ESPF 20-30 | Class 25 |
| ESPF 30-50 | Class 35 |
| ESPF > | Class 50 |

According to the invention, the optical and colorimetric measurements (in reflection) of the face coated with the interferential coating IC1 of the invention (convex/front face) and the face coated with the standard UV reflection coating IC2 (concave/rear face): mean reflection factors Rv, Ruv, $Rm^{B1}$, $Rm^{B2}$, $Rm^{B3}$, hue angle h, and chroma C* in the international colorimetric CIE (L*, a*, b*) space were carried out with a spectrophotometer, taking into account the standard illuminant D65, and the standard observer 10° (for h and C*). They are provided for an angle of incidence of 0°, 15° or 35°.

According to the invention, the "angle of incidence (symbol $\theta$)" is the angle formed by a ray light incident on an ophthalmic lens surface and a normal to the surface at the point of incidence. The ray light is for instance an illuminant light source, such as the standard illuminant D65 as defined in the international colorimetric CIE L*a*b* (1976). Generally, the angle of incidence changes from 0° (normal incidence) to 90° (grazing incidence). The usual range for angle of incidence is from 0° to 75° and is typically of 0°, 15° or 35° for the present invention.

## B) <u>Optical article according to the invention</u>

As mentioned-above, the Applicant has developed a transparent optical article, especially an ophthalmic lens such as spectacle lens, comprising a base element, such as a substrate in mineral or organic glass coated, on its rear main face, with a standard UV reflection coating and, on its front main face, with the multilayered coating according to the invention, said transparent optical article has a super high reflectivity in the UV band, and especially in the UV band ranging from 350 to 380 nm and a very low transmittance between 350 and 380 nm which is lower than0.25%, showing an extremely high level of UV protection.

The Applicant has shown that the new multilayer interference coating IC1 according to the invention allows, surprisingly, the amount of UV passing through substrates, and in particular ORMA® substrates, to be decreased, without however reflecting visible light and without causing yellowing of the optical article.

The Applicant has also shown that the new multilayer interference coating IC1 according to the invention allows ESPF to be greatly increased, without however increasing reflectance in the visible.

Lastly, the method for producing this new anti-UV multilayer interference coating IC1 is easy to implement. In particular, it is easier to implement than the UV absorbers that must be incorporated into the substrate. In addition, the required materials are the same as those required for standard antireflection coatings.

Thus, the present invention **(*** copy/paste claim 1***)** relates to optical article, defined as OA, having a front main face and a rear main face, comprising at least:

one base element having a front main surface and a rear main surface,
at least one front interferential coating, defined as IC1, deposited to the front main surface of the base element comprising at least one layer having a low refractive index which is lower than 1.55, defined as "LI layer", and at least one layer having a high refractive index which is equal to or higher than 1.55, defined as "HI layer", and
at least one back interferential coating, defined as IC2, deposited to the rear main surface of the base element comprising at least one layer having a low refractive index which is lower than 1.55, defined as "LI layer", and at least one layer having a high refractive index which is equal to or higher than 1.55, defined as "HI layer", said IC2 has a mean reflection factor Ruv(IC2) in the UV region ranges from 280 to 380 nm that is lower than 5%, for an angle of incidence of 35°,
characterized in that:

- IC1 comprises a front main face having a mean reflection factor $Ruv^{350-380}_{(IC1)}$ in the UV region ranges from 350 to 380 nm for an angle of incidence within the range of from 0° to 15°, and preferably of 0°, is higher than or equal to 75% (*** note: characteristic of IC1 alone, i.e.: without IC2***), and the optical article has:
- a mean transmission factor in the region ranging from 350 to 380 nm, defined as $Tuv^{350-380}_{(OA)}$ at an angle of incidence of 0° that is lower than or equal to 2%,
- a transmission factor at 380 nm, defined as $T^{380}_{(OA)}$, at an angle of incidence of 0° that is lower than or equal to 8%.

**B.1 The substrate or tinted substrate**

The optical article according to the present invention comprises a base element.

According to one embodiment, this base element can be a laminate, that is to say a support film of optical quality to be fixed on an optical/ophthalmic substrate thanks to an adhesive such as a pressure-sensitive adhesive of optical quality (PSA layer). Preferably, the support film is made of cellulose triacetate (TAC) and has a thickness of at least 40 microns, preferably a thickness in the range of 40 $\mu$m to 300 $\mu$m inclusive and preferably a thickness of 80 to 190 $\mu$m. Materials of the support film may be selected from the group of films made of cellulose triacetate (TAC), cellulose acetate butyrate (CAB), polycarbonate (PC), poly(ethylene terephthalate) (PET), poly(methylmethacrylate) (PMMA), urethane polymer (TPU), cyclo olefin copolymer (COC), polyester copoblock amide (like Pebax) and Polyimides.

According to another embodiment (described hereafter), the base element can consist in an ophthalmic substrate of a transparent optical article, such as a lens or lens blank, and more preferably an ophthalmic lens or lens blank.

Generally speaking, the interferential coating of the optical article according to the invention may be deposited onto any substrate, and preferably onto organic lens substrates, for example a thermoplastic or thermosetting plastic material.

Thermoplastic may be selected from, for instance: polyamides; polyimide; polysulfones; polycarbonates and copolymers thereof; poly(ethylene terephthalate) and polymethylmethacrylate (PMMA).

Thermoset materials may be selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39®) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phthalic acids and allyl aromatics such as styrene, polymer and copolymer of urethane and thiourethane, polymer and copolymer of epoxy, and polymer and copolymer of sulphide, disulfide and episulfide, and combinations thereof.

As used herein, a (co)polymer is intended to mean a copolymer or a polymer. As used herein, a (meth)acrylate is intended to mean an acrylate or a methacrylate. As used herein, a polycarbonate (PC) is intended to mean either homopolycarbonates or copolycarbonates and block copolycarbonates.

Homopolymers of diethylene glycol bis(allyl carbonate) (CR 39®), allylic and (meth)acrylic copolymers, having a refractive index between 1,54 and 1,58, polymer and copolymer of thiourethane, polycarbonates are preferred.

According to a characteristic of the invention, the bare base element (i.e.: a base element as such and/or which are not coated with any interference coatings) has a refractive index which is lower than 1.59 and/or has a mean transmission factor in the region ranging from 350 to 380 nm, defined as $Tuv^{350-380}$(BE), that is higher than 0.0004%.

According to the invention, a "base element having a refractive index which is lower than 1.59" includes the following values and/or any intervals comprised between these values (limits included): 1.58; 1.57; 1.56; 1.55; 1.54; 1.53; 1.52; 1.51; 1.50; 1.49; etc.

Also, according to the invention, a "base element having a $Tuv^{350-380}$(BE) which is higher than 0.0004%" includes the following values (in %) and/or any intervals comprised between these values (limits included): 0.00045; 00050; 00051; 0,0060; 0,0070; 0,0080; 0,0090; 0,01; 0,02; 0,03; 0,04; 0,05; 0,06; 0,07; 0,08; 0,09; 0,1; 0,2; 0,3; 0,4; 0,5; 0,6; 0,7; 0,8; 0,9; 1,0; 1,1; 1, 2; 1,3; 1,4; 1,5, 1,6; 1,7; 1,8; 1,9; 2,0; etc.

In particular, the base element recommended for the invention is a substrate selected from materials obtained by (co)polymerization of di(ethylene glycol) bis(allyl carbonate) and may correspond to the CR-39® ESSILOR ORMA® lenses.

As it will be shown hereafter, the substrate may be coated with one or more functional coatings prior to depositing the interferential coating IC1 of the invention and/or the standard UV reflection coating IC2. These functional coatings traditionally used in optics may be, without limitation, an impact-resistant primer layer, an abrasion-resistant coating (that is different from the claimed external abrasion-resistant coating), a polarizing coating, a photochromic coating or a tinted coating. In the following a substrate means either a bare substrate or such a coated substrate.

Prior to depositing the interferential coatings IC1 and IC2, the surfaces of the underlying layers can be submitted to specific treatments, so as to reinforce the adhesion of one layer to the next one. Such treatment can be a physical or chemical surface activating pre-treatment that is generally conducted under vacuum. It may be a bombardment with energetic and/or reactive species, for example with an ion beam ("Ion Pre-Cleaning" or "IPC") or with an electron beam, a corona discharge treatment, an ion spallation treatment, an ultraviolet treatment or a plasma-mediated treatment under vacuum, generally using an oxygen or an argon plasma. It may also be an acid or basic treatment and/or a solvent-based treatment (water, hydrogen peroxide or any organic solvent).

**B.2 The interferential coating IC1**

As previously mentioned, the interferential coating IC1 according to the invention enables to improve the optical characteristics of an optical article comprising, on its rear main face, a standard UV reflecting interference coating IC2 having a mean reflection factor $Ruv_{(IC2)}$ in the UV region ranges from 280 to 380 nm that is lower than 5% for an angle of incidence of 35°. Indeed, IC1 according to the invention is especially designed to possess very high reflective performances in the UV region, especially such as between 350 to 380 nm, while preferably being able to minimize the reflection in the visible domain.

In particular, IC1 comprises a front main face (i.e.: main face that is the furthest from the substrate) having a mean reflection factor $Ruv^{350\text{-}380}{}_{(IC1)}$ in the UV region ranges from 350 to 380 nm for an angle of incidence within the range of from 0° to 15°, and preferably of 0° which is higher than or equal to 75%, in particular higher than or equal to 80%, preferably higher than or equal to 85%, more preferably higher than or equal to 88% and typically higher than or equal to 90%.

According to the invention, a "mean reflection factor $Ruv^{350\text{-}380}{}_{(IC1)}$ for an angle of incidence within the range of from 0° to 15°" which is higher than 75% includes the following values (in %) and/or any intervals comprised between these values (limits included): 75; 76; 77; 78; 79; 80; 81; 82; 83; 84; 85; 86; 87; 88; 89; 90; 91; 92; 93; 94; 95; 96; 97; 98; 99; etc.

This mean reflection factor $R_{UV(IC1)}$ on the front main face of IC1 may also be named hereafter the "forward mean reflection factor $Ruv_{(IC1)}$".

Especially, the UV reflection between 350 to 380 nm on the front main face of IC1 according to the invention is very high whatever the angle of incidence.

Generally, the forward mean reflection factor $Ruv^{350\text{-}380}{}_{(IC1)}$ on the front main face of IC1 in the UV region ranges from 350 to 380 nm whatever the angle of incidence within the range of from 0° to 60°, is higher than or equal to 68%, in particular higher than or equal to 69%, preferably higher than or equal to 70%, more preferably higher than or equal to 71% and typically higher than or equal to 72%.

According to the invention, a forward "mean reflection factor $Ruv^{350\text{-}380}{}_{(IC1)}$ for an angle of incidence within the range of from 0° to 60°" which is higher than 68% includes the following values (in %) and/or any intervals comprised between these values (limits included): 68; 69; 70; 71; 72; 73; 74; 75; 76; 77; 78; 79; 80; 81; 82; 83; 84; 85; 86; 87; 88; 89; 90; 91; 92; 93; 94; 95; 96; 97; 98; 99; etc.

As it will be shown by Fig.1, 3 and 5, the spectral reflectivity curve on the main front face of the IC1 according to the invention generally has, in the wavelength range from 320 nm to 420 nm, a "bell" shape.

According to a first characteristic à the invention, IC1 has, on its front main face, a reflectance curve having a maximum reflectance, defined as $R^{max}{}_{IC1}$ within the 350-410 nm range, typically, within the 370-390 nm range for an angle of incidence ranging from 0° to 15°, preferably of 0°.

In general, $R^{max}{}_{IC1}$ on the front main face of IC1 for an angle of incidence within the range of from 0° to 15°, and preferably of 0°, is higher than or equal to 80%, in particular higher than or equal to 85%, preferably higher than or equal to 90%, more preferably higher than or equal to 95% and typically higher than or equal to 98%.

According to another characteristic of the invention, the reflectance at 380 nm, defined as $R^{380}{}_{(IC1)}$ on the front main face of IC1 for an angle of incidence within the range of from 0° to 15°, and preferably of 0°, is also higher than or equal to 80%, in particular higher than or equal to 85%, preferably higher than or equal to 90%, more preferably higher than or equal to 95% and typically higher than or equal to 98%.

Ideally, the reflection peak of the front main face of IC1 is centred on around 380 nm and hence $R^{max}{}_{IC1}$ corresponds generally to $R^{380}{}_{(IC1)}$.

As used herein, a "$R^{380}{}_{(IC1)}$ or $R^{max}{}_{IC1}$ which is higher than 80%" includes the following values (in %) and/or any intervals comprised between these values (limits included): 80; 81; 82; 83; 84; 85; 86; 87; 88; 89; 90; 91; 92; 93; 94; 95; 96; 97; 98; 99; etc.

According to another characteristic of the invention, IC1 has, on its front main face, a reflectance curve decreasing from 90% to 10% at a rate higher than or equal to 1.5 %/nm, preferably at a rate higher than or equal to 1.6 %/nm, more preferably at a rate higher than or equal to 2.0 %/nm and typically preferably at a rate higher than or equal to 2.10 %/nm.

According to the invention, "a rate higher than or equal to 1.5 %/nm" includes the following values (in %/nm) and/or any intervals comprised between these values (limits included): 1.5; 1.51; 1.52; 1.53; 1.54; 1.55; 1.56; 1.57; 1.58; 1.59; 1.60; 1.61; 1.62; 1.63; 1.64; 1.65; 1.66; 1.67; 1.68; 1.69; 1.70; 1.75; 1.80; 1.85; 1.90; 1.95; 2.00; 2.05; 2.10; 2.15; 2.20; 2.25; 2.30; 2.35; 2.40; 2.45; 2.50; 2.55; 2.60; 2.65; 2.70; 2.75; 2.76; 2.77; 2.78; 2.89; 2.80; etc.

Generally, IC1 has, on its front main face, a reflectance curve decreasing from 80% to 20% at a rate higher than or equal to 1.8 %/nm, preferably at a rate higher than or equal to 2.0 %/nm, more preferably at a rate higher than or equal to 2.10 %/nm and typically preferably at a rate higher than or equal to 2.15 %/nm.

According to the invention, "a rate higher than or equal to 1.8 %/nm" includes the following values (in %/nm) and/or any intervals comprised between these values (limits included): 1.80; 1.85; 1.90; 1.95; 2.00; 2.05; 2.10; 2.15; 2.20; 2.25; 2.30; 2.35; 2.40; 2.45; 2.50; 2.55; 2.60; 2.65; 2.70; 2.75; 2.76; 2.77; 2.78; 2.89; 2.80; 2.85; 2.90; 2.95; 3.00; 3.05; 3.10; 3.15; 3.20; 3.25; 3.30; 3.35; 3.40; 3.45; 3.50; 3.55; etc.

In addition, the "bell" shape of the spectral reflectivity curve on the main front face of the IC1 can be characterized by its height (maximum reflectivity, $R_{max}$) and its width at mid-height (FWHM or "Full Width at Half Maximum"). In particular, the FWHM is lower than or equal to 150 nm, especially lower than or equal to 140 nm, preferably lower than or equal to 130 nm and typically lower than or equal to 120 nm.

According to the invention, "a rate higher than or equal to 1.8 %/nm" includes the following values (in %/nm) and/or any intervals comprised between these values (limits included): 1.80; 1.85; 1.90; 1.95; 2.00; 2.05; 2.10; 2.15; 2.20; 2.25; 2.30; 2.35; 2.40; 2.45; 2.50; 2.55; 2.60; 2.65; 2.70; 2.75; 2.76; 2.77; 2.78; 2.89; 2.80; 2.85; 2.90; 2.95; 3.00; 3.05; 3.10; 3.15; 3.20; 3.25; 3.30; 3.35; 3.40; 3.45; 3.50; 3.55; 3.60; etc.

In general, the IC1 according to the invention has very good performances in the visible domain between 380 to 780 nm, that is to say, it enables to strongly reduce the forward reflection in the visible domain.

Especially, the IC1 coating, has on its front main face, a mean light reflection factor in the visible region $Rv_{(IC1)}$ for an angle of incidence of within the range of rom 0° to 15° that is lower than or equal to 2.0 %, in particular lower than or equal to 1.5%, preferably lower than or equal to 1.0%, more preferably lower than or equal to 0.90% and typically lower than or equal to 0.85%, such as for instance lower than or equal to 0.80%.

Moreover, it may be particularly desirable in some cases to selectively filter a relatively small portion of the blue light spectrum, i.e., within the 380-450 nm region, preferably the 420 nm - 450 nm region (B1) and/or 440 nm - 460 nm region (B3), while preserving the ability to transmit neighboring wavelengths. Indeed, it has been found that blocking too much of the blue spectrum can interfere with scotopic vision and mechanisms for regulating biorhythms, referred to as "circadian cycles". Thus, in a preferred embodiment, the IC1 coating blocks less than 10 % or 6 % of light having a wavelength ranging from 465 to 495 nm (B2).

According to a characteristic of the invention, IC1 has, on its front main face for an angle of incidence ranging from 0° to 15° an average blue light reflection factor $Rm^{B1}_{(IC1\ front\ fac)}$ within a wavelength range of from 420 nm to 450 nm, which is higher than or equal to 5 %, preferably higher than or equal to 8.0%, in particular higher than or equal to 10.0%, and preferably an average blue light reflection factor $Rm^{B1}_{(IC1\ front\ face)}$ lower than or equal to 40.0%, in particular lower than or equal to 35.0% and typically lower than or equal to 30.0%.

According to another characteristic of the invention, IC1 has, on its rear main face for an angle of incidence ranging from 35°, an average blue light reflection factor $Rm^{B1}_{(IC1\ rear\ face)}$ within a wavelength range of from 420 nm to 450 nm for an angle of incidence of 35°, which is lower than or equal to 10.0%, especially lower than or equal to 8.0%, in particular lower than or equal to 7.5%.

According to a characteristic of the invention, IC1 has, on its front main face for an angle of incidence ranging from 0° to 15° (preferably at 15°) an average blue light reflection factor $Rm^{B2}_{(IC1\ front\ fac)}$ within a wavelength range of from 465 nm to 495 nm, which is lower than or equal to 10.0%, preferably lower than or equal to 9.0%, in particular lower than or equal to 8.0%, and typically lower than or equal to 6%.

According to a characteristic of the invention, IC1 has, on its front main face for an angle of incidence ranging from 0° to 15° an average blue light reflection factor $Rm^{B3}_{(IC1\ front\ fac)}$ within a wavelength range of from 440 nm to 460 nm, which is higher than or equal to 1.0%, preferably higher than or equal to 1.5 %, in particular higher than or equal to 2.0%, and typically higher than or equal to 2.5%.

The structure of IC1 according to the invention will be described hereafter.

According to the invention, IC1 comprises at least one layer, preferably two layers having a low refractive index which is lower than 1.55, defined as "LI layer", and at least one layer, preferably two layers having a high refractive index which is equal to or higher than 1.55, defined as "HI layer". It is here a simple stack, since the layer total number in the interferential coating is higher than or equal to 2 and in general lower than or equal to 16.

According to an aspect of the invention, the total number of HI and LI layers in the interferential coating IC1 is higher than or equal to 5, preferably higher than or equal to 6, more preferably higher than or equal to 7 and typically higher than or equal to 8.

According to another aspect of the invention, the total number of HI and LI layers in the interferential coating IC1 is lower than or equal to 16, especially lower than or equal to preferably lower than or equal to 15, more preferably lower than or equal to 13 and typically lower than or equal to 12.

For instance, the total number of HI and LI layers in the interferential coating IC1 ranges from 8 to 12 layers.

HI layers and LI layers don't need to alternate with each other in the stack, although they also may, according to one embodiment of the invention. Two HI layers (or more) may be deposited onto each other, as well as two LI layers (or more) may be deposited onto each other. In the present application, when two HI layers (or more) are deposited onto each other, they are not considered as being a single HI layer when counting the number of layers of the interferential stack. The same applies to stacks of two or more adjacent LI layers.

In general, the HI layers and LI layers alternate with each other in the stack of the interferential coating IC1 according to the invention.

According to another aspect of the invention, IC1 has a total physical thickness lower than or equal to 1 μm, in particular lower than or equal to 900 nm and typically lower than or equal to 750 nm.

As used herein, "a thickness lower than or equal to 1 μm" includes the following values (in nm) and/or any intervals comprised between these values (limits included): 1000; 950; 900; 850; 800; 790; 780; 770; 760; 750; 740; 730; 720; 710; 700; 690; 680; 670; 660; 650; 640; 630; 620; 610; 600; 590; 580; 570; 560; 550; 540; 530; 520; 510; 500; 490; etc.

In particular, each HI layer of IC1 has a physical thickness lower than or equal to 55 nm, preferably lower than or equal to 50 nm, more preferably lower than or equal to 48 nm and typically lower than or equal to 45 nm.

In addition, apart from the LI outermost layer, each LI layer of IC1, has in general a physical thickness lower than or equal to 90 nm, preferably lower than or equal to 80 nm, more preferably lower than or equal to 75 nm and typically lower than or equal to 70 nm.

Generally, the outermost LI layer is the outermost layer of IC1 and has a physical thickness lower than or equal to 150 nm, preferably lower than or equal to 140 nm, more preferably lower than or equal to 135 nm and typically lower than or equal to 130 nm.

Moreover, the innermost layer of IC1 is a HI layer that has a physical thickness lower than or equal to 50 nm, preferably lower than or equal to 40 nm, more preferably lower than or equal to 38 nm and typically lower than or equal to 35 nm; preferably the innermost HI layer has a physical thickness ranging from 10 to 50 nm, preferably from 15 nm to 35 nm.

According to a characteristic of the invention, the ratio of the physical thickness of LI layers: physical thickness of HI layers is lower than 3.5; and is preferably ranging from 1.0 to 3.2 and typically ranging from 1.5 to 3.0.

According to one embodiment of the invention, IC1 comprises, in order starting from the substrate, which is optionally coated with one or more functional coatings,

(1) a HI layer having a physical thickness lower than or equal to 50 nm, in particular ranging from 10 nm to 50 nm, preferably ranging from 15 nm to 45 nm, and typically ranging from 20 nm to 35 nm;

(2) a LI layer having a physical thickness lower than or equal to 80 nm, in particular ranging from 20 nm to 80 nm, preferably ranging from 30 nm to 70 nm, and typically ranging from 40 nm to 60 nm, such as ranging from 45 nm to 55 nm;

(3) a HI layer having a physical thickness lower than or equal to 55 nm, in particular ranging from 10 nm to 55 nm, preferably ranging from 20 nm to 50 nm, and typically ranging from 30 nm to 45 nm;

(4) a LI layer having a physical thickness lower than or equal to 95 nm, in particular ranging from 45 nm to 95 nm, preferably ranging from 55 nm to 85 nm, and typically ranging from 60 nm to 75 nm,

(5) a HI layer having a physical thickness lower than or equal to 55 nm, in particular ranging from 10 nm to 55 nm, preferably ranging from 15 nm to 45 nm, and typically ranging from 20 nm to 40 nm;

(6) a LI layer having a physical thickness lower than or equal to 90 nm, in particular ranging from 50 nm to 80 nm, preferably ranging from 55 nm to 75 nm, and typically ranging from 60 nm to 70 nm,

(7) a HI layer having a physical thickness lower than or equal to 55 nm, in particular ranging from 10 nm to 55 nm, preferably ranging from 15 nm to 50 nm, and typically ranging from 20 nm to 45 nm;

(8) a LI layer having a physical thickness lower than or equal to 90 nm, in particular ranging from 45 nm to 80 nm, preferably ranging from 50 nm to 75 nm, and typically ranging from 55 nm to 70 nm,

(9) a HI layer having a physical thickness lower than or equal to 55 nm, in particular ranging from 10 nm to 55 nm, preferably ranging from 15 nm to 50 nm, and typically ranging from 20 nm to 45 nm;

(10) a LI layer having a physical thickness lower than or equal to 150 nm, in particular ranging from 45 nm to 140 nm, preferably ranging from 50 nm to 135 nm, and typically ranging from 55 nm to 130 nm,

(11) optionally, a HI layer having a physical thickness lower than or equal to 55 nm, in particular ranging from 15 nm to 55 nm, preferably ranging from 20 nm to 50 nm, and typically ranging from 30 nm to 45 nm;

(12) optionally, a LI layer having a physical thickness lower than or equal to 150 nm, in particular ranging from 100 nm to 140 nm, preferably ranging from 120 nm to 135 nm, and typically ranging from 110 nm to 130 nm,

In general, the HI layers are conventional high-refractive-index layers, well known in the art. They generally contain one or more mineral oxides such as, in a non-limiting manner, zirconia ($ZrO_2$), titanium oxide ($TiO_2$), trititanium pentoxide ($Ti_3O_5$), alumina ($Al_2O_3$), tantalum pentoxide ($Ta_2O_5$), neodymium oxide ($Nd_2O_5$), praseodymium oxide ($Pr_2O_3$), praseodymium titanate (PrTiOs), $La_2O_{3i}$, $Nb_2O_{5i}$, or $Y_2O_3$. Optionally the high-index layers may also contain silica or other low-refractive-index materials, provided that their refractive index is higher than 1.6 as indicated above. Preferred materials are $TiO_2$, PrTiOs, $ZrO_2$, $Ta_2O_5$, $Al_2O_3$, $Y_2O_3$ and their mixtures.

Preferably, the one or more HI layers are made of titanium oxide ($TiO_2$), trititanium pentoxide ($Ti_3O_5$) and/or tantalum pentoxide ($Ta_2O_5$).

The LI layers are also well-known low-refractive-index layers and may comprise, in a non-limiting manner: silicon oxide, or else a mixture of silica and alumina, in particular silica doped with alumina, the latter contributing to increase the thermal resistance of the UV-reflecting interference coating. Each LI layer is preferably a layer comprising at least 80% by weight silica and better still at least 90% by weight silica, relative to the total weight of the layer, and even better still consists of a silica layer.

Optionally, the low-index layers may also contain high-refractive-index materials, provided that the refractive index of the resulting layer is lower than 1.55.

When a LI layer comprising a mixture of $SiO_2$ and $Al_2O_3$ is used, it preferably comprises from 1% to 10% by weight, better still from 1% to 8% by weight and even better still from 1% to 5% by weight of $Al_2O_3$, with respect to the total weight of $SiO_2$ + $Al_2O_3$ in this layer.

For example, $SiO_2$ doped with 4% or less $Al_2O_3$ by weight, or SiO2 doped with 8% $Al_2O_3$ may be employed. Commercially available $SiO_2$ / $Al_2O_3$ mixtures may be used, such as the LIMA® mixture sold by Umicore Materials AG (refractive index comprised between n = 1.48-1.50 to 550 nm) or the substance L5® sold by Merck KGaA (refractive index n = 1.48 to 500 nm).

The outermost layer of IC1 is in general a layer based on silica, preferably comprising at least 80% by weight silica and better still at least 90% by weight silica (for example a layer of silica doped with alumina) relative to the total weight of the layer, and even better still consists of a silica layer.

The optical article, such as an ophthalmic lens, of the invention may be made antistatic, i.e., such as to not retain and/or develop an appreciable electrostatic charge, by virtue of the incorporation of at least one electrically conductive layer into the stack present on the surface of the ophthalmic lens.

This electrically conductive layer is preferably located between two layers of IC1 (and/or IC2) and/or is adjacent to a high-refractive-index layer of this IC1 (and/or IC2). Preferably, the electrically conductive layer is located immediately under a low-refractive-index layer of IC1, and ideally forms the penultimate layer of IC1, i.e. it is located immediately under the silica-based external layer of IC1.

The electrically conductive layer must be sufficiently thin not to decrease the transparency of the UV-reflecting interference coating. The electrically conductive layer is preferably made from an electrically conductive and highly transparent material, generally an optionally doped metal oxide. In this case, its thickness preferably ranges from 1 to 15 nm and more preferably from 1 to 10 nm. The electrically conductive layer preferably comprises an optionally doped metal oxide chosen from indium oxide, tin oxide, zinc oxide and their mixtures. Indium tin oxide (tin-doped indium oxide, $In_2O_3$:Sn), aluminum-doped zinc oxide (ZnO:Al), indium oxide ($In_2O_3$), and tin oxide ($SnO_2$) are preferred. According to one optimal embodiment, the electrically conductive and optically transparent layer is a layer of indium tin oxide (ITO) or a layer of tin oxide.

Generally, the electrically conductive layer contributes, within the stack, but to a limited extent, because of its small thickness, to the obtainment of antireflection properties and forms a high-refractive-index layer in the UV-reflecting interference coating. This is the case for layers made from an electrically conductive and highly transparent material such as layers of ITO.

**B.3** The interferential coating IC2

As mentioned above, the rear main face of the optical article according to the invention is coated, on its rear main face, with a back interferential coating, defined as IC2, comprising at least one layer having a low refractive index which is lower than 1.55, defined as "LI layer", and at least one layer having a high refractive index which is equal to or higher than 1.55, defined as "HI layer", said IC2 has a mean reflection factor $Ruv_{(IC2)}$ in the UV region ranges from 280 to 380 nm that is lower than 5%, for an angle of incidence of 35° (i.e.: anti-UV coating).

The material of the HI and LI layers are the same as the ones disclosed for IC1 and will not be further detailed hereafter. IC2 may also comprise at least one electrically conductive layer such as described above.

According to an embodiment, IC2 may correspond to the interferential coating described for instance in the document WO2012/076714 or in the documents EP 2 122 392, EP 1 633 684, EP 1 467 955, EP 1 392 613 or in any document describing a rear multilayered interference coating having a mean reflection factor $Ruv_{(IC2)}$ in the UV region ranges from 280 to 380 nm that is lower than 5%, for an angle of incidence of 35° (i.e.: anti-UV coating).

According to an embodiment, IC2 may correspond to the interferential coating described in the document WO 2012/076714.

For instance, IC2 comprises, in order starting from the substrate, which is optionally coated with one or more functional coatings and an underlayer of 100 to 200 nm thickness, which is preferably made of silica:

- a high-refractive-index layer having a refractive index higher than 1.6 of 8 nm to 40 nm thickness, preferably from 10 nm to 25 nm;
- a low-refractive-index layer having a refractive index lower than 1.55 of 10 nm to 35 nm thickness, preferably from 13 nm to 33 nm;

- a high-refractive-index layer having a refractive index higher than 1.6 of 80 nm to 120 nm thickness, preferably from 90 to 110 nm;
- optionally, an electrically conductive layer of 3 to 10 nm thickness;
- a low-refractive-index layer having a refractive index lower than 1.55 of 50 nm to 90 nm thickness, preferably from 60 nm to 80 nm.

For instance, IC2 presents the following structure starting from the rear main face of the substrate: a sublayer made for instance of $SiO_2$ having a physical thickness of 150 nm, a HI layer having a physical thickness of 18 nm, a LI layer having a physical thickness of 23 nm, a HI layer having a physical thickness of 93 nm, an antistatic layer, a LI layer having a physical thickness of 82 nm. For instance, the HI layer may comprise $ZrO_2$ and the LI layer may comprise $SiO_2$. A substrate comprising on its rear main face this kind of IC2 structure has a low backward mean reflection factor that is around 2.59% at an angle of incidence of 35°, while having an antireflective good performance in the visible domain (Rv is around 0.59% at an angle of incidence of 35°). Therefore, this kind of coating enables to protect the wearer's eye from light rays that may reflect onto the lens rear face at oblique incidence (i.e.: from 30 to 45°). In addition, this exemplified IC2 has a blue light reflection $Rm^{B1}$ (35°) on the Cc surface of the substrate which is very low.

## B.4 Sub-layer

In one embodiment of the present invention, the IC1 and/or IC2 may be deposited (generally directly) onto a sub-layer (i.e.: the sub-layer is positioned between the substrate and the interferential coating), also named "underlayer". It should be noted that such sub-layer does not belong to the interferential coating IC1 and/or IC2.The expression " a sub-layer" is understood to mean a coating of relatively large thickness used with the aim of improving mechanical properties such as the resistance of said coating to abrasion and/or scratches and/or to promote its adhesion to the substrate or to the subjacent coating.

On account of its relatively large thickness, the underlayer generally does not participate in the interference optical activity, in particular in the case where it possesses a refractive index similar to that of the underlying coating (which is generally an anti-abrasion and anti-scratch coating) or that of the substrate when the underlayer is deposited directly on the substrate. Therefore, the underlayer, when it is present, is not considered to form part of the reflecting properties of IC1 or IC2.

The underlayer must be thick enough to increase the resistance of IC1 and/or IC2 to abrasion, but preferably not too thick in order not to absorb light as, depending on the nature of the underlayer, this could significantly decrease the relative transmittance $\tau_v$. Its thickness is generally smaller than 300 nm and better still 200 nm and is generally larger than 90 nm and better still 100 nm.

The underlayer preferably comprises a layer based on $SiO_2$, this layer preferably comprising at least 80% by weight silica and better still at least 90% by weight silica relative to the total weight of the layer, and even better still this layer consists of a silica layer. The thickness of this silica-based layer is generally smaller than 300 nm and better still 200 nm and is generally larger than 90 nm and better still 100 nm. According to another embodiment, this $SiO_2$-based layer is a layer of silica doped with alumina, in proportions such as defined above, and preferably consists of a layer of silica doped with alumina. According to one particular embodiment, the underlayer consists of a layer of $SiO_2$. It is preferable for the underlayer to be a monolayer. However, the underlayer may be laminated (multilayer), in particular when the underlayer and the underlying coating (or the substrate if the underlayer is deposited directly on the substrate) have a non-negligible refractive index difference.

## B.5 Process

The various layers of the interferential coating and the above-mentioned sublayer are preferably deposited by vapor phase deposition, under vacuum, in a vacuum deposition chamber, according to any of the following methods: i) by evaporation, optionally under ion beam assistance; ii) by ion-beam spraying; iii) by cathode sputtering; iv) by plasma-assisted chemical vapor deposition. These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for **coating heat-sensitive substrates such as** organic glasses.

## B.6 Other functional layers

In some applications, it is preferred that the main surface of the substrate be coated with one or more functional coatings improving its optical and/or mechanical properties, prior to depositing the interferential coating of the invention.

These functional coatings traditionally used in optics may be, without limitation, an impact-resistant primer layer, an internal abrasion-resistant coating (also named hard coat), an antistatic coating especially on the concave face of the optical article, or a stack made of two or more of such coatings. Preferably, the ophthalmic lens comprises no photochromic coating and/or comprises no photochromic substrate.

In general, an optical article such as an ophthalmic lens according to the invention comprises a substrate coated in succession on its front face with an anti-shock primer layer, with an anti-abrasion and/or anti-scratch layer, with IC1 according to the invention, and with a hydrophobic and/or oleophobic coating. The optical article according to the invention is preferably an ophthalmic lens for a pair of spectacles (spectacle lenses), or an ophthalmic lens blank. The lens may be a polarized lens, a photochromic lens, or a tinted sunglass lens, optionally providing a correction.

In addition, the back face of the optical article such as ophthalmic lens substrate may be coated in succession with an anti-shock primer layer, with an anti-abrasion and/or anti-scratch layer, with the anti-UV multilayer interference coating IC2, and with a hydrophobic and/or oleophobic coating.

**B.61** The abrasion-resistant and/or to scratch-resistant coatings

The abrasion-resistant and/or to scratch-resistant coatings are preferably hard coatings based on poly(meth) acrylates or on silanes generally comprising one or more mineral fillers intended to increase the hardness and/or the refractive index of the coating once cured.

Hard anti-abrasion and/or anti-scratch coatings are preferably prepared from compositions comprising at least one alkoxysilane and/or a hydrolyzate of the latter, for example obtained by hydrolysis with a hydrochloric acid solution and optionally condensation and/or curing catalysts.

Mention may be made, among the coatings recommended in the present invention, of coatings based on epoxysilane hydrolyzates, such as those described in the patents FR 2702486 (EP 0614957), US 4 211 823 and US 5 015 523.

A preferred composition for an anti-abrasion and/or anti-scratch coating is that disclosed in the patent FR 2 702 486 on behalf of the applicant. It comprises an epoxytrialkoxysilane and dialkyldialkoxysilane hydrolyzate, colloidal silica and a catalytic amount of aluminum-based curing catalyst, such as aluminum acetylacetonate, the remainder being essentially composed of solvents conventionally used for the formulation of such compositions. Preferably, the hydrolyzate used is a hydrolyzate of γ-glycidoxypropyltrimethoxysilane (GLYMO) and dimethyldiethoxysilane (DMDES).

The anti-abrasion and/or anti-scratch coating composition may be deposited on the main face of the substrate by dip coating or spin coating. It is subsequently cured by the appropriate route (preferably thermal or UV).

The thickness of the anti-abrasion and/or anti-scratch coating generally varies from 2 to 10 μm, preferably from 3 to 5 μm.

**B.62** Primer coating

It is possible, prior to the deposition of the anti-abrasion and/or anti-scratch coating, to deposit, on the substrate, a primer coating which improves the impact resistance and/or the adhesion of the subsequent layers in the final product. This coating can be any impact-resistant primer layer conventionally used for articles made of transparent polymeric material, such as ophthalmic lenses.

Mention may be made, among preferred primer compositions, of compositions based on thermoplastic polyurethanes, such as those described in the Japanese patents JP 63-141001 and JP 63-87223, poly(meth)acrylic primer compositions, such as those described in the patent US 5 015 523, compositions based on thermosetting polyurethanes, such as those described in the patent EP 0 404 111, and compositions based on poly(meth)acrylic latexes or on latexes of polyurethane type, such as those described in the patents US 5 316 791 and EP 0 680 492.

Preferred primer compositions are polyurethane-based compositions and latex-based compositions, in particular polyurethane latexes optionally containing polyester units.

Among commercially available primer compositions suitable for the invention, mention may be made of the following: Witcobond(R) 232, Witcobond(R) 234, Witcobond(R) 240, Witcobond(R) 242, Neorez(R) R- 962, Neorez(R) R-972, Neorez(R) R-986 and Neorez(R) R-9603.

It is also possible to use in the primer compositions blends of these latexes, in particular of polyurethane latex and poly(meth)acrylic latex.

These primer compositions may be deposited on the faces of the article by dip coating or spin coating then dried at a temperature of at least 70°C and possibly of as a high as 100°C and preferably of about 90°C, for a time of 2 minutes to 2 hours and generally of about 15 minutes, in order to form primer layers having thicknesses, post-bake, of 0.2 to 2.5 μm and preferably from 0.5 to 1.5 μm.

**B.63** Hydrophobic coatings and/or oleophobic coatings

The ophthalmic lens according to the invention may also comprise coatings, formed on the UV-reflecting interference coating and capable of modifying its surface properties, such as hydrophobic coatings and/or oleophobic coatings (anti-smudge top coat). These coatings are preferably deposited on the external layer of the UV-reflecting interference coating. They are generally less than or equal to 10 nm in thickness, preferably from 1 to 10 nm in thickness and better still from 1 to 5 nm in thickness.

It is generally a question of fluorosilane or fluorosilazane coatings. They may be obtained by depositing a fluorosilane or fluorosilazane precursor preferably comprising at least two hydrolysable groups per molecule. The fluorosilane precursors preferably contain fluoropolyether groups and better still perfluoropolyether groups. These fluorosilanes are well known and are described, *inter alia* in patents US 5,081,192, US 5,763,061, US 6,183, 872, US 5,739, 639, US 5,922,787, US 6,337,235, US 6,277,485 and EP 0933377.

One preferred hydrophobic and/or oleophobic coating composition is sold by Shin-Etsu Chemical under the denomination KP 801 M(R). Another preferred hydrophobic and/or oleophobic coating composition is sold by Daikin Industries under the denomination OPTOOL DSX(R). It is a question of a fluororesin comprising perfluoropropylene groups.

**B.7 Optical characteristics of the optical article of the invention**

Unexpectedly, the Applicant developed an anti-UV multilayer interference coating, IC1, having an extremely high reflectance in the UV, especially in the 350-380 UV band, leading to a decrease in UV transmission passing through the optical article, notably when the one comprises an anti-UV multilayered coating on its rear face. Consequently, the optical article according to the invention ha an extremely high level of UV protection for the wearer.

Indeed, according to the invention, the optical article has, on its front main face, a mean transmission factor in the region ranging from 350 to 380 nm, defined as $Tuv^{350\text{-}380}_{(OA)}$ at an angle of incidence of 0° that is lower than or equal to 2%.

In particular, the $Tuv^{350\text{-}380}_{(Front\ face\ OA)}$ at an angle of incidence of 0° is lower than or equal to 1.5%, in particular lower than or equal to 1.0%, preferably lower than or equal to 0.5% and typically lower than or equal to 0.25%.

As used herein, "a $Tuv^{350\text{-}380}_{(OA)}$ at an angle of incidence of 0° that is lower than or equal to 2%" includes the following values (in %) and/or any intervals comprised between these values (limits included): 2; 1.9; 1.8; 1.7; 1.6; 1.5; 1.4; 1.3; 1.2; 1.1; 1.0; 0.9; 0.8; 0.75; 0.70; 0.65; 0.60; 0.55; 0.50; 0.45; 0.40; 0.35; 0.30; 0.25; 0.20; 0.15; 0.10; 0.05, etc.

Also, according to the invention, the optical article has, on its front main face, a transmission factor at 380 nm, defined as $T^{380}_{(OA)}$, at an angle of incidence of 0° that is lower than or equal to 8%.

Generally, $T^{380}_{(Front\ face\ OA)}$ at an angle of incidence of 0° is lower than or equal to 6.0%, in particular lower than or equal to 5.0%, preferably lower than or equal to 4.0%, more preferably lower than or equal to 2.0% and typically lower than or equal to 1.5%.

As used herein, "a $T^{380}_{(OA)}$, at an angle of incidence of 0° that is lower than or equal to 8%" includes the following values (in %) and/or any intervals comprised between these values (limits included): 8.0; 7.9; 7.8; 7.7; 7.6; 7.5; 7.4; 7.3; 7.2; 7.1; 7.0; 6.9; 6.8; 6.7; 6.6; 6.5; 6.4; 6.5; 6.4; 6.3; 6.2; 6.1; 6.0; 5.5; 5.0; 4.5; 4.0; 3.5; 3.0; 2.5; 2.0; 1.9; 1.8; 1.7; 1.6; 1.5; 1.4; 1.3; 1.2; 1.1; 1.0; etc.

According to an aspect of the invention, the optical article has on its front main face, a mean reflection factor $Ruv^{350\text{-}380}_{(Front\ face\ OA)}$ in the UV region ranges from 350 to 380 nm for an angle of incidence of within the range of rom 0° to 15° which is higher than or equal to 80%, in particular higher than or equal to 85%, preferably higher than or equal to 90%, more preferably higher than or equal to 92% and typically higher than or equal to 95% **(*** lenses 4 to 6 including IC2***).**

Generally, a mean reflection factor $Ruv^{350\text{-}380}_{(Front\ face\ OA)}$ which is higher than or equal to 80%" includes the following values (in %) and/or any intervals comprised between these values (limits included): 80; 81; 82; 83; 84; 85; 86; 87; 88; 89; 90;91;92;93;94; 95; 96; 97; 98; 99, etc.

In particular, the optical article has a UV cut, defined as the wavelength at which the transmittance through the optical article is about 1%, within a wavelength range of from 370 nm to 385 nm, preferably of from 375 nm to 388 nm and especially of from 378 nm to 382 nm.

Consequently, the optical article of the invention may have generally a ESPF coefficient that is higher than 20, in particular higher than or equal to 22 and typically higher than or equal to 25.

According to an aspect of the invention, the optical article of the invention has excellent antireflective properties both on its front main face and its rear main face.

Especially, the optical article has on its front main face, a mean light reflection factor in the visible region $Rv_{(\ front\ face\ OA)}$ for an angle of incidence of within the range of rom 0° to 15° that is lower than or equal to 2.5 %, in particular lower than or equal to 2.0%, preferably lower than or equal to 1.8%, more preferably lower than or equal to 1.7% and typically lower than or equal to 1.6%, such as for instance lower than or equal to 0.8%.

In addition, the optical article has on its rear main face, a mean light reflection factor in the visible region

$Rv_{(\text{ rear face OA})}$ for an angle of incidence of within the range of rom 0° to 15° that is lower than or equal to 2.5%, in particular lower than or equal to 2.4%, preferably lower than or equal to 2.3%, more preferably lower than or equal to 2.2%.

According to an aspect of the invention, the optical article of the invention has also an excellent protection against harmful blue light coming from onto its the rear main face (at oblique incidence). In general, the substrates are transparent for blue light and the standard anti-UV reflection coating IC2 may also have a very low $Rm^{B1}$. Thus, the backward $Rm^{B1}$ values are more dependent on IC1 than on IC2.

Thus, the optical article has in particular, on its rear main face, an average blue light reflection factor $Rm^{B1}_{(\text{rear face OA})}$ within a wavelength range of from 420 nm to 450 nm for an angle of incidence of 35°, which is lower than or equal to 8.0%, preferably lower than or equal to 7.0%, in particular lower than or equal to 6.0%, preferably lower than or equal to 5.0% and typically lower than or equal to 4.5%.

Therefore, thanks to the characteristics of the invention and as it is shown in the experiment part below, the optical article has a very high UV protection efficiency, even if said optical article includes a standard UV reflection coating on its rear main face. Indeed, the IC1 coating according to the invention enables to provide to the front main face of the OA a very high reflectivity in 350-380 UV range (generally higher than 80% at an angle of incidence ranging from 0° to 15°) with a UV-cut off around 380 nm. In addition, it provides also a high ESPF value (i.e.: in general, higher than or equal to 25).

EXAMPLES

## A) Characterization

Colorimetric measurements (in reflection) of the face coated with the exemplified IC1 (front face) or of the face coated with the standard UV reflection IC2: mean reflection factors Rv, Ruv, $Rm^{B1}$, $Rm^{B2}$, $Rm^{B3}$, hue angle h, chroma C* in the international colorimetric CIE (L*, a*, b*) space were carried out with a spectrophotometer, taking into account the standard illuminant D65, and the standard observer 10° (for h and C*). They are provided for an angle of incidence of 0° or 15° for forward reflection (Cx face) and 35° for backward reflection (Cc face).

## B) General procedures

The ophthalmic lenses employed in the examples comprise an ESSILOR ORMA® lens substrate 30 of 65 mm diameter, of refractive index of 1.50, of -2.00 diopter power and of 1.2 mm thickness, coated on its front and back faces with the anti-abrasion and anti-scratch coating (hard coat) disclosed in example 3 of patent EP 0614957 (of refractive index equal to 1.47 and of 3.5 μm thickness), based on a hydrolyzate of GLYMO and DMDES, colloidal silica and aluminum acetylacetonate, then an antireflection multilayer interference coating according to the invention.

Said anti-abrasion and anti-scratch coating (defined as HC 1.5) was obtained by deposition and curing of a composition comprising, by weight, 224 parts of GLYMO, 80.5 parts of 0.1N HCl, 120 parts of DMDES, 718 parts of 30% by weight colloidal silica in methanol, 15 parts aluminum acetylacetonate and 44 parts of ethyl cellosolve. The composition also comprises 0.1% of FLUORADTM FC-430(R) surfactant from 3M, by weight relative to the total weight of the composition.

The layers of the antireflection coating were deposited without heating of the substrates by vacuum evaporation (evaporation source: the electron gun).

The deposition tool was a Satis 1200DLF machine equipped with a Temescal (8kV) electron gun for the evaporation of the oxides, and a (Veeco Mark II) ion gun for the preliminary phase of preparing the surface of the substrate with argon ions (IPC).

The thickness of the layers was controlled by means of a quartz microbalance. The spectral measurements were carried out using a variable-incidence Perkin-Elmer lambda 850 spectrophotometer with a universal reflectance accessory (URA).

## C) Procedure

### Lenses 1 to 3

The process used to prepare the ophthalmic lenses comprised introducing the substrate coated on its front face with the anti-abrasion and anti-scratch coating into a vacuum deposition chamber, a step of pumping the chamber down until a secondary vacuum was obtained, a step of activating the surface of the substrate with a beam of argon ions, stopping the ionic irradiation, and then a step of coating the various layers of the multilayered interference coating IC1 such as illustrated on the table below (IC1. Ex. A, IC1 Ex.B and IC1. Ex.C) on the anti-abrasion and anti-scratch coating by successive evaporations and lastly a venting step.

**Lenses 6 to 8**

For the preparation of Lenses 6 to 8, the same procedure as for Lenses 1 to 3 was followed for the deposition of IC1 on the front main face of the substrate (i.e.: convex face, Cx) prepared, respectively, with the same IC1 structures, that is to say IC1. Ex. A, IC1 Ex.B and IC1 Ex.C. In addition, the rear main face of the substrate previously coated with the anti-abrasion and anti-scratch coating was coated, successively, with an underlayer (150 nm of $SiO_2$) and with a standard UV reflection coating IC2. The process used for depositing IC2 is same as the one for depositing IC1.

The structural characteristics of IC2 are as follows:

| | IC2 | |
|---|---|---|
| | **Materials** | **Thickness (nm)** |
| | Air | |
| 5 | $SiO_2$ | 82 |
| 4 | ITO | 6.5 |
| 3 | $ZrO_2$ | 93 |
| 2 | $SiO_2$ | 23 |
| 1 | $ZrO_2$ | 19 |
| | $SiO_2$ | 150 |
| | Substrate | |

*Table 3*

**D) Tested Lenses according to the invention and results**

**D.1 Lenses 1 to 3 according to the invention (Fg.1, Fig.3 and Fig.5)**

The table 4 below illustrates the structure and the optical characteristics of Lenses 1 to 3 comprising, respectively, IC1. Ex. A, IC1 Ex.B and IC1. Ex.C according to the invention.

| | Lens 1 | | Lens 2 | | Lens 3 | |
|---|---|---|---|---|---|---|
| | IC1 EX.A | | IC1 EX.B | | IC1 EX.C | |
| | Materials | Thickness | Materials | Thickness | Materials | Thickness |
| | Air | | Air | | Air | |
| 12 | - | - | **$SiO_2$** | 124 | - | - |
| 11 | - | - | **$TaO_5$** | 42 | - | - |
| 10 | **$SiO_2$** | 128 | **$SiO_2$** | 63 | **$SiO_2$** | 125 |
| 9 | **$TiO_2$** | 29 | **$TaO_5$** | 36 | **$Ti_3O_5$** | 34 |
| 8 | **$SiO_2$** | 60 | **$SiO_2$** | 67 | **$SiO_2$** | 63 |
| 7 | **$TiO_2$** | 27 | **$TaO_5$** | 40 | **$Ti_3O_5$** | 35 |
| 6 | **$SiO_2$** | 68 | **$SiO_2$** | 64 | **$SiO_2$** | 61 |
| 5 | **$TiO_2$** | 24 | **$TaO_5$** | 37 | **$Ti_3O_5$** | 30 |
| 4 | **$SiO_2$** | 65 | **$SiO_2$** | 69 | **$SiO_2$** | 66 |
| 3 | **$TiO_2$** | 33 | **$TaO_5$** | 43 | **$Ti_3O_5$** | 34 |
| 2 | **$SiO_2$** | 54 | **$SiO_2$** | 55 | **$SiO_2$** | 51 |
| 1 | **$TiO_2$** | 22 | **$TaO_5$** | 30 | **$Ti_3O_5$** | 31 |
| | Substrate + HC 1.5 (front face/Cx) | | Substrate + HC 1.5 (front face/Cx) | | Substrate + HC 1.5 (front face/Cx) | |
| | | | | | | |
| Optical characteristic on front face (**Cx side**) of the substrate coated with IC1 **at θ=15°** | | | | | | |
| **$h^*_{@15°}$** | | 307 | | 312 | | 306 |
| **$C^*_{@15°}$** | | 60 | | 79.6 | | 65.2 |
| **$Rv_{(IC1)\ @15°}$** | | 0.64% | | 0.64% | | 0.64% |
| **$Rv_{(IC1)\ @0°}$** | | 0.71% | | 0.73% | | 0.76% |
| **$R_{uv}^{280-380}{}_{(IC1)\ @15°}$** | | 64.26% | | 58.10% | | 53.11% |
| **$R_{uv}^{350-380}{}_{(IC1)\ @0°}$** | | 94.85% | | 97.97% | | 92.21% |
| **$Rm^{B1}{}_{(IC1)\ @15°}$** | | 5.81% | | 20.40% | | 11.36% |
| **$Rm^{B2}{}_{(IC1)\ @15°}$** | | 5.40% | | 5.05% | | 5.83% |
| **$Rm^{B3}{}_{(IC1)\ @15°}$** | | 7.94% | | 1.97% | | 8.29% |
| Optical characteristic on rear face (**Cc side**) of the substrate coated with IC1 at θ**=35°** | | | | | | |
| **$Rm^{B1}{}_{(IC1)}$** | | 6.97% | | 4.00% | | 7.74% |

*Table 4*

**Fig.1** shows the reflectance curve on the front main face of Lens 1, i.e.: Orma® substrate coated with IC1 according to Ex.A comprising 10 layers of alternating $TiO_2$ and $SiO_2$. This IC1 Ex.A coating has a very strong reflection band between 280 to 240 nm, with a maximum reflectance $R^{max}{}_{(IC1)}$ of 96% at a wavelength around 370 nm. On the front main face, the Ruv is extremely high, 94.85% at an angle of incidence of 0° and 64.26% at an angle of incidence of 15°. On the longer wavelength side, the reflection of this coating decreased rapidly down to about 1% at 461 nm. The average decreasing rate of reflectance from 90% to 10% in the spectral curve is 2.78%/nm, while the average decreasing rate of reflectance from 80% to 20% in the spectral curve is 3.43%. In addition, this coating IC1 Ex.A has a low reflection in the visible region, Rv is 0.71% at an angle of incidence of 0° and 0.64% at an angle of incidence of 15°.

**Fig.3** shows the reflectance curve on the front main face of Lens 2, i.e.: Orma® substrate coated with IC1 according to Ex.B comprising 12 layers of alternating TaOs and $SiO_2$. This IC1 Ex.B has a very strong reflection band between 280-440 nm, with a maximum reflectance $R^{max}_{(IC1)}$ of 98% at a wavelength around 360 nm. On the front main face, the Ruv is also extremely high, 99.97% at an angle of incidence of 0° and 58.10% at an angle of incidence of 15°. On the longer wavelength side, the reflection of this coating decreased rapidly down to about 1% at 442 nm. The average decreasing rate of reflectance from 90% to 10% in the spectral curve is 2.45%/nm, while the average decreasing rate of reflectance from 80% to 20% in the spectral curve is 2.98%. In addition, this coating IC1 Ex.B has a low reflection in the visible region, Rv is 0.73% at an angle of incidence of 0° and 0.64% at an angle of incidence of 15°.

**Fig.5** shows the reflectance curve on the front main face of Lens 3, i.e.: Orma® substrate coated with IC1 according to Ex.C comprising 10 layers of alternating $Ti_3O_5$ and $SiO_2$. This IC1 Ex.C has a very strong reflection band between 280-440 nm, with a maximum reflectance $R^{max}_{(IC1)}$ of 92.70% at a wavelength around 365 nm. On the front main face, the Ruv is also extremely high, 92.21% at an angle of incidence of 0° and 53.11% at an angle of incidence of 15°. On the longer wavelength side, the reflection of this coating decreased rapidly down to about 7.2% at 438 nm. The average decreasing rate of reflectance from 90% to 10% in the spectral curve is 1.62%/nm, while the average decreasing rate of reflectance from 80% to 20% in the spectral curve is 2.15%. In addition, this coating IC1 Ex.C has a low reflection in the visible region, Rv is 0.76% at an angle of incidence of 0° and 0.64% at an angle of incidence of 15°.

**D.2 Lenses 4 to 6 according to the invention (Fg.2, Fig.4 and Fig.6)**

The table 5 below illustrates the structure and the optical characteristics of Lenses 4 to 6 according to the invention.

*Table 5*

| | | **Lens 4** | **Lens 5** | **Lens 6** |
|---|---|---|---|---|
| | | Air | | |
| | | IC1 Ex.A | IC1 Ex.B | IC1 Ex.C |
| | | Substrate coated on its front and back faces with the hard coat HC 1.5 | | |
| | | IC2 | | |
| Optical characteristics on the front (forward reflection) and on the rear (backward reflection) main faces of the lens | | | | |
| **Transmission** | **$Tv_{(OA)\ 0°}$** | 97.73% | 97.71% | 52.41% |
| | UV cut-off | 380 nm | 379 nm | 380 nm |
| | **$T_{uv}^{280-380}$ $_{(OA)\ @\ 0°}$** | 0.03% | 0.45% | 0.03% |
| | **$T_{uv}^{350-380}$ $_{(OA)\ @\ 0°}$** | 0.14% | 0.22% | 0.17% |
| | **$T^{380}$ $_{@\ 0°}$** | 0.97% | 1.20% | 1.05% |
| | **$T_m^{B1}$ $_{(OA)\ @\ 0°}$** | 88.74% | 67.64% | 44.94% |
| | **$T_m^{B2}$ $_{(OA)\ @\ 0°}$** | 91.41% | 92.33% | 52.34% |
| | **$T_m^{B3}$ $_{(OA)\ @\ 0°}$** | 91.40% | 95.11% | 51.89% |
| **Total forward reflection (Cx side)** | **$Rv_{(OA)\ @\ 0°}$** | 1.54% | 1.56% | 0.99% |
| | **$RV_{(OA)\ @15°}$** | 1.48% | 1.49% | 0.99% |
| | **$R_{uv\ (OA)\ @15°}$** | 64.55% | 57.55% | 51.97% |
| | **$R_{uv}^{350-380}$$_{(OA)\ @0°}$** | 94.84% | 97.93% | 92.19% |
| **Total backward reflection (Cc side) (35°)** | **$Rv_{(OA)\ @\ 35°}$** | 1.83% | 1.75% | 2.30% |
| | **$R_{uv\ (OA)\ @\ 35°}$** | 3.92% | 3.95% | 3.87% |
| | **$Rm^{B1}$ $_{(OA)\ @\ 35°}$** | 6.82% | 4.14% | 4.91% |
| | **$Rm^{B2}$ $_{(OA)\ @\ 35°}$** | 2.73% | 2.62% | 4.17% |
| | **$Rm^{B3}$ $_{(OA)\ @\ 35°}$** | 8.70% | 6.34% | 7.52% |
| **ESPF** | | 25 | 25 | 25 |

When the IC1 Ex.A coating is applied on the front main face of an ORMA® substrate providing a standard UV reflection coating (IC2) on its concave main face, a UV cut-off of 380 nm is obtained. Fig.2 shows the transmission spectrum of Lens 4. UV light transmittance is extremely low: between 280 to 350 nm, the UV light transmittance $\mathbf{T_{uv}}^{\mathbf{280\text{-}380}}_{\mathbf{(OA)\ @\ 0^\circ}}$ of this lens is 0.03% and, between 350 to 380 nm, the UV light transmittance $\mathbf{T_{uv}}^{\mathbf{350\text{-}380}}_{\mathbf{(OA)\ @\ 0^\circ}}$ is 0.14%, the transmittance at 380 nm $T^{380}_{@\ 0^\circ}$ is 0.97% and the total backward UV reflectance $\mathbf{R_{uv\ (OA))\ @\ 35^\circ}}$ is 3.92%, while having a very low reflection in both front and rear main faces for an angle of incidence ranging from 0° to 15° ($\mathbf{Rv_{(OA)\ @\ 0^\circ\ forward}}$ = 1.54 % and $\mathbf{RV_{(OA)\ @\ 35^\circ\ backward}}$ = 1.83%. The ESPF of lens 4 is about 25 by considering UV transmission from front direction at 0° and total back reflection at 35°.

When the IC1 Ex.B coating is applied on the front main face of an ORMA® substrate providing a standard UV reflection coating (IC2) on its concave main face, a UV cut-off of 379 nm is obtained. Fig.4 shows the transmission spectrum of Lens 5. UV light transmittance is extremely low: between 280 to 350 nm, the UV light transmittance $\mathbf{T_{uv}}^{\mathbf{280\text{-}380}}_{\mathbf{(OA)\ @\ 0^\circ}}$ of this lens is 0.045% and, between 350 to 380 nm, the UV light transmittance $\mathbf{T_{uv}}^{\mathbf{350\text{-}380}}_{(OA)\ \mathbf{@\ 0^\circ}}$ is 0.22%, the transmittance at 380 nm $T^{380}_{@\ 0^\circ}$ is 1.20% and the total backward UV reflectance $\mathbf{R_{uv\ (OA))\ @\ 35^\circ}}$ is 3.95%, while having a very low reflection in both front and rear main faces for an angle of incidence ranging from 0° to 15° ($\mathbf{Rv_{(OA)\ @\ 0^\circ\ forward}}$ = 1.56 % and $\mathbf{R_{V(OA)\ @\ 35^\circ\ backward}}$ = 1.75%. The ESPF of lens 5 is also about 25 by considering UV transmission from front direction at 0° and total back reflection at 35°. In addition, this lens has an excellent blue cut effect.

When the IC1 Ex.C coating is applied on the front main face of an ORMA® substrate providing a standard UV reflection coating (IC2) on its concave main face, a UV cut-off of 380 nm is obtained. Fig.6 shows the transmission spectrum of Lens 6. UV light transmittance is extremely low: between 280 to 350 nm, the UV light transmittance $\mathbf{T_{uv}}^{\mathbf{280\text{-}380}}_{\mathbf{(OA)\ @\ 0^\circ}}$ of this lens is 0.03% and, between 350 to 380 nm, the UV light transmittance $\mathbf{T_{uv}}^{\mathbf{350\text{-}380}}_{(OA)\ \mathbf{@\ 0^\circ}}$ is 0.17%, the transmittance at 380 nm $T^{380}_{@\ 0^\circ}$ is 1.05% and the total backward UV reflectance $\mathbf{R_{uv\ (OA))\ @\ 35^\circ}}$ is 3.87%, while having a very low reflection in both front and rear main faces for an angle of incidence ranging from 0° to 15° ($\mathbf{Rv_{(OA)\ @\ 0^\circ\ forward}}$ =0.99 % and $\mathbf{Rv_{(OA)\ @\ 35^\circ\ backward}}$ = 2.30%. The ESPF of lens 6 is also about 25 by considering UV transmission from front direction at 0° and total back reflection at 35°. In addition, this lens has an excellent blue cut effect.

### D.3 Comparative assays

The optical characteristics of lenses 1 to 6 according to the invention have been compared with lenses according to the prior art and belonging to Essilor International.

The prior art documents are as follows:

- WO 2016/102857, defined hereafter as "WO 2016" (Ex.1 to EX.3 and especially Ex.2),
- WO 2015/040184, defined hereafter as "WO 2015" (Ex.1 to Ex.3 and especially Ex.3), and
- WO 2013/171434 defined hereafter as "WO 2013" (especially Ex.3).

These lenses according to the prior art (ORMA® substrate coated on its front main face with an interferential coating such as defined in these documents) have already very good UV reflective characteristics. However, as mentioned in the description of the prior art, combined with a standard UV reflection coating on its rear main face, the resulted lenses have only satisfying results in terms of UV protection efficiency (i.e.: not high enough).

D.31 Lenses 4 to 6 versus Ex.1 to 3 of WO 2016 and Ex.1 to 3 of WO 2015 (Fig.7)

The Applicant has first compared Lenses 4 to 6 according to the invention relative to Ex.1 to 3 of WO 2016 and EX.1 to 3 of WO 2015 that have been also coated on their rear main face with IC2.

Fig.7 shows the transmittance spectra of these as-coated lenses according to the prior art as compared to Lenses 4 to 6 of the invention. It is noted that the transmittance in the wavelengths ranging from 350 to 380 nm $\mathbf{T_{uv}}^{\mathbf{350\text{-}380}}_{\mathbf{(OA)\ @\ 0^\circ}}$ of Lenses 4 to 6 of the invention is extremely low, especially as compared to $\mathbf{T_{uv}}^{\mathbf{350\text{-}380}}_{\mathbf{(OA)\ @\ 0^\circ}}$ of the as-coated lenses according to the prior art comprising the front interferential coating of Ex.1 to EX.3 of WO 2016 and Ex.1 to EX.3 of WO 2015.

**D.32** Lenses 1 to 3 versus Ex.1 of WO 2016, Ex.3 of WO 2015 and Ex.3 of WO 2013 (Fig.8 to 10 and Tables 6-8)

Then, the Applicant has compared Lenses 1 to3 according to the invention relative to Ex.1 of WO 2016, Ex.3 of WO 2015 and Ex.3 of WO 2013 (i.e.: best examples of these prior art documents).

Fig.8 and Table 6 especially show the forward $\mathbf{R_{uv}}^{\mathbf{350\text{-}380}}$ as function of the angle of incidence ranging from 0° to 60°.

| | | Lens 1 | Lens 2 | Lens 3 | Ex-2 (WO2016) | Ex-3 (WO 2015) | Ex-3 (WO 2013) |
|---|---|---|---|---|---|---|---|
| $Ruv^{350-380}$ (%) | 0,00 | 94,85 | 97,97 | 92,21 | 61,31 | 69,98 | 69,10 |
| | 5,00 | 94,82 | 97,97 | 92,18 | 60,89 | 70,39 | 69,53 |
| | 10,00 | 94,75 | 97,98 | 92,09 | 59,60 | 71,56 | 70,75 |
| | 15,00 | 94,60 | 97,98 | 91,90 | 57,35 | 73,26 | 72,55 |
| | 20,00 | 94,35 | 97,92 | 91,59 | 54,02 | 75,17 | 74,58 |
| | 25,00 | 93,95 | 97,77 | 91,09 | 49,54 | 76,94 | 76,49 |
| | 30,00 | 93,32 | 97,43 | 90,30 | 43,92 | 78,23 | 77,92 |
| | 35,00 | 92,32 | 96,76 | 89,09 | 37,42 | 78,77 | 78,59 |
| | 40,00 | 90,70 | 95,50 | 87,23 | 30,48 | 78,31 | 78,26 |
| | 45,00 | 88,13 | 93,18 | 84,47 | 23,66 | 76,69 | 76,74 |
| | 50,00 | 84,33 | 89,21 | 80,66 | 17,47 | 73,84 | 73,95 |
| | 55,00 | 79,45 | 83,47 | 76,02 | 12,28 | 70,00 | 70,12 |
| | 60,00 | 74,36 | 76,87 | 71,36 | 8,54 | 65,98 | 66,00 |

| | | Lens 1 | Lens 2 | Lens 3 | Ex-2 (WO2016) | Ex-3 (WO 2015) | Ex-3 (WO 2013) |
|---|---|---|---|---|---|---|---|
| $Ruv^{350-380}$ min | 0-60° | 74,36 | 76,87 | 71,36 | 8,54 | 65,98 | 66,00 |
| $Ruv^{350-380}$ max | 0-60° | 94,85 | 97,98 | 92,21 | 61,31 | 78,77 | 78,59 |

*Table 6*

The Fig.8 shows that Lenses 1 to 3 of the invention has a $\mathbf{R_{uv}^{350-380}}$ that is far higher to higher than Ex.1 of WO 2016, Ex.3 of WO 2015 and Ex.3 of WO 2013 and this whatever the angle of incidence. Especially, the forward $\mathbf{R_{uv}^{350-380}}$ decreases rapidly down to lower than 10% at an angle of incidence of 0°. Therefore, UV protection of WO 2016 is not so high and efficient. $\mathbf{R_{uv}^{350-380}}$ of Ex.3 of WO 2015 and Ex.3 of WO 2013 is similar, i.e.: $\mathbf{R_{uv}^{350-380}}$ of these two examples is higher than 65% for an angle of incidence ranging from 0° to 60°, with a maximum $R_{uv}^{350-380}$ of 78.8% at 30° for Ex.3 of WO 2015 and $R_{uv}^{350-380}$ of 78.59% at 35° for Ex.3 of WO 2015.

Fig.9 and Table 7 show the forward $\mathbf{Rv_{@0°}}$ as function of the angle of incidence ranging from 0° to 20°. This Fig.9 shows that Lenses 1 to 3 of the invention has a $\mathbf{Rv_{@0°}}$ that is far lower to lower than Ex.1 of WO 2016, Ex.3 of WO 2015 and Ex.3 of WO 2013 and this whatever the angle of incidence.

*Table 7*

| | θ | Lens 1 | Lens 2 | Lens 3 | Ex-2 (WO2016) | Ex-3 (WO 2015) | Ex-3 (WO 2013) |
|---|---|---|---|---|---|---|---|
| **Forward Rv (%)** | 0° | 0,71 | 0,73 | 0,76 | 0,93 | 2,20 | 2,40 |
| | 5° | 0,70 | 0,71 | 0,74 | 0,93 | 2,17 | 2,36 |
| | 10° | 0,67 | 0,68 | 0,70 | 0,93 | 2,07 | 2,27 |
| | 15° | 0,64 | 0,64 | 0,64 | 0,93 | 1,94 | 2,12 |
| | 20° | 0,61 | 0,61 | 0,58 | 0,94 | 1,77 | 1,94 |

Fig.10 and Table 8 show the backward $Rm^{B1}{}_{@\,35°}$ as function of the angle of incidence ranging from 25° to 50°. This Fig.10 shows that Lenses 1 to 3 of the invention has a $Rm^{B1}{}_{@\,35°}$ which is far lower than Ex.3 of WO 2015 and Ex.3 of WO 2013 and this whatever the angle of incidence.

*Table 8*

| | θ | Lens 1 | Lens 2 | Lens 3 | Ex-2 (WO2016) | Ex-3 (WO 2015) | Ex-3 (WO 2013) |
|---|---|---|---|---|---|---|---|
| **Backward $R_m^{B1}$ (%)** | 30° | 5,85 | 5,42 | 7,83 | 0,15 | 37,17 | 38,27 |
| | 35° | 6,97 | 4,00 | 7,74 | 0,26 | 29,22 | 30,26 |
| | 40° | 7,94 | 4,28 | 7,88 | 0,44 | 21,16 | 22,08 |
| | 45° | 8,47 | 5,21 | 7,97 | 0,75 | 13,86 | 14,59 |

## Claims

**1.** An optical article, defined as OA, having a front main face and a rear main face, comprising at least:

one base element having a front main surface and a rear main surface,
at least one front interferential coating, defined as IC1, deposited to the front main surface of the base element comprising at least one layer having a low refractive index which is lower than 1.55, defined as "LI layer", and at least one layer having a high refractive index which is equal to or higher than 1.55, defined as "HI layer", and
at least one back interferential coating, defined as IC2, deposited to the rear main surface of the base element comprising at least one layer having a low refractive index which is lower than 1.55, defined as "LI layer", and at least one layer having a high refractive index which is equal to or higher than 1.55, defined as "HI layer", said IC2 has a mean reflection factor $Ruv_{(IC2)}$ in the UV region ranges from 280 to 380 nm that is lower than 5%, for an angle of incidence of 35°,
**characterized in that** the optical article has,

- IC1 comprises a front main face having a mean reflection factor $Ruv^{350-380}_{(IC1)}$ in the UV region ranges from 350 to 380 nm for an angle of incidence within the range of from 0° to 15°, and preferably of 0°, is higher than or equal to 75% (*** note: characteristic of IC1 alone, i.e.: without IC2***), and the optical article has:
- a mean transmission factor in the region ranging from 350 to 380 nm, defined as $Tuv^{350-380}_{(OA)}$ at an angle of incidence of 0° that is lower than or equal to 2%,
- a transmission factor at 380 nm, defined as $T^{380}_{(OA)}$, at an angle of incidence of 0° that is lower than or equal to 8%.

**2.** The optical article according to claim 1, wherein the bare base element has a refractive index which is lower than 1.59 and/or has a mean transmission factor in the region ranging from 350 to 380 nm, defined as $Tuv^{350-380}$(BE), that is higher than 0.0004%, preferably the base element is a substrate selected from materials obtained by (co)polymerization of di(ethylene glycol) bis(allyl carbonate).

**3.** The optical article according to claim 1 or 2, wherein said $Tuv^{350-380}{}_{(Front\ face\ OA)}$ at an angle of incidence of 0° is lower than or equal to 1.5%, in particular lower than or equal to 1.0%, preferably lower than or equal to 0.5% and typically lower than or equal to 0.25%.

4. The optical article according to any one of the preceding claims, wherein $T^{380}_{(Front\ face\ OA)}$ at an angle of incidence of 0° is lower than or equal to 6.0%, in particular lower than or equal to 5.0%, preferably lower than or equal to 4.0%, more preferably lower than or equal to 2.0% and typically lower than or equal to 1.5%.

5. The optical article according to any one of the preceding claims, wherein said optical article has on its rear main face, an average blue light reflection factor $Rm^{B1}_{(rear\ face\ OA)}$ within a wavelength range of from 420 nm to 450 nm for an angle of incidence of 35°, which is lower than or equal to 8.0%, preferably lower than or equal to 7.0%, in particular lower than or equal to 6.0%, preferably lower than or equal to 5.0% and typically lower than or equal to 4.5%.

6. The optical article according to any one of the preceding claims, wherein said optical article has on its front main face, a mean reflection factor $Ruv^{350\text{-}380}_{(Front\ face\ OA)}$ in the UV region ranges from 350 to 380 nm for an angle of incidence of within the range of from 0° to 15° that is higher than or equal to 80%, in particular higher than or equal to 85%, preferably higher than or equal to 90%, more preferably higher than or equal to 92% and typically higher than or equal to 95%.

7. The optical article according to any one of the preceding claims, wherein said optical article has a UV cut, defined as the wavelength at which the transmittance through the optical article is about 1%, within a wavelength range of from 370 nm to 385 nm, preferably of from 375 nm to 388 nm and especially of from 378 nm to 382 nm.

8. The optical article according to any one of the preceding claims, wherein said IC1 has a reflectance curve having a maximum reflectance, defined as $R^{max}_{IC1}$ within the 350-410 nm range, typically, within the 370-390 nm range for an angle of incidence ranging from 0° to 15°, and preferably the Full Width at Half Maximum, defined as FWHM, (is lower than 150 nm, preferably lower than 140 nm.

9. The optical article according to any one of the preceding claims, wherein said IC1 has a reflectance curve decreasing from 90% to 10% at a rate higher than or equal to 2.5% per nm wavelength, preferably at a rate higher than or equal to 2.6% per nm wavelength, more preferably at a rate higher than or equal to 2.7% per nm wavelength and typically preferably at a rate higher than or equal to 2.75% per nm wavelength.

10. The optical article according to any one of the preceding claims, wherein said optical article has on its front main face, a mean light reflection factor in the visible region $Rv_{(\ front\ face\ OA)}$ for an angle of incidence of within the range of rom 0° to 15° that is lower than or equal to 2.5 %, in particular lower than or equal to 2.0%, preferably lower than or equal to 1.8%, more preferably lower than or equal to 1.7% and typically lower than or equal to 1.6%, such as for instance lower than or equal to 0.8%.

11. The optical article according to any one of the preceding claims, wherein said optical article has on its rear main face, a mean light reflection factor in the visible region $Rv_{(\ rear\ face\ OA)}$ for an angle of incidence of within the range of rom 0° to 15° that is lower than or equal to 2.5%, in particular lower than or equal to 2.4%, preferably lower than or equal to 2.3%, more preferably lower than or equal to 2.2%.

12. The optical article according to any one of the preceding claims, wherein said IC1 comprises a number of layers higher than or equal to 5, preferably higher than or equal to 6, and typically higher than or equal to 8 and a number of layers lower than or equal to 16, preferably lower than or equal to 15, and typically lower than or equal to 14.

13. The optical article according to any one of the preceding claims, wherein said IC1 has a total physical thickness lower than or equal to 1 μm, in particular lower than or equal to 900 nm and typically lower than or equal to 750 nm.

14. The optical article according to any one of the preceding claims, wherein each HI layer of said IC1 has a physical thickness lower than or equal to 50 nm, preferably lower than or equal to 45 nm.

15. The optical article according to any one of the preceding claims, wherein apart from the LI outermost layer, each LI layer of said IC1, has a physical thickness lower than or equal to 80 nm, preferably lower than or equal to 75 nm and typically lower than or equal to 70 nm.

Fig.1

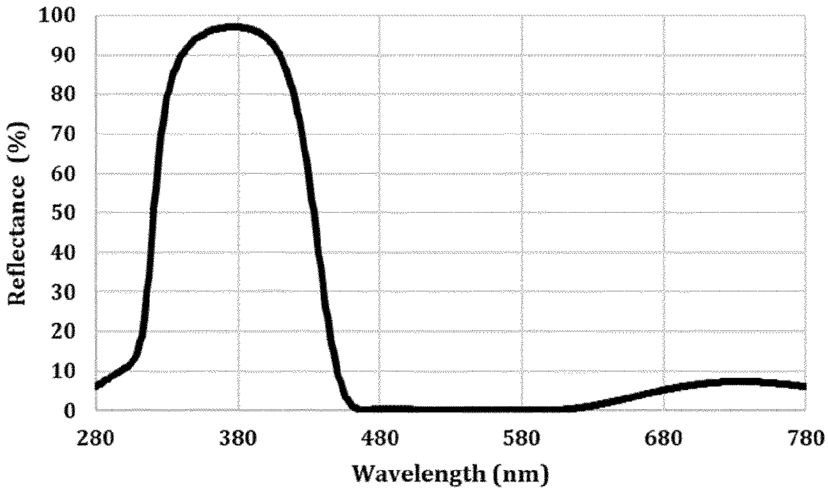


Fig.2

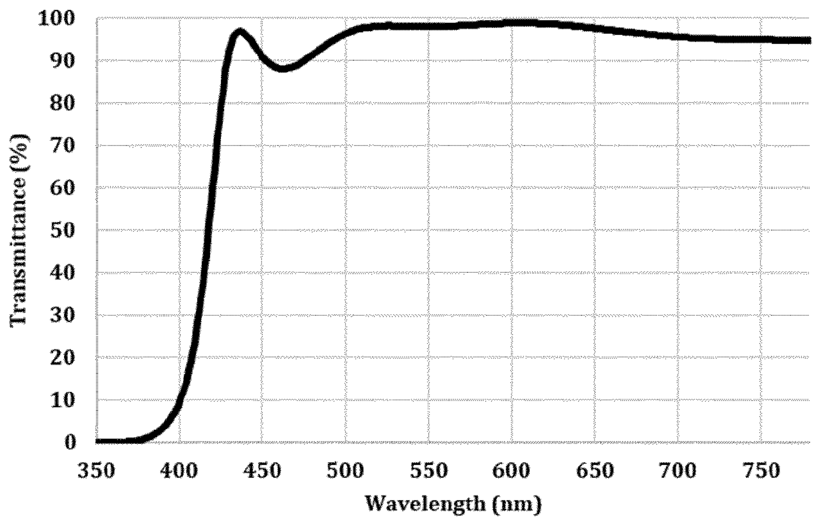


Fig.3

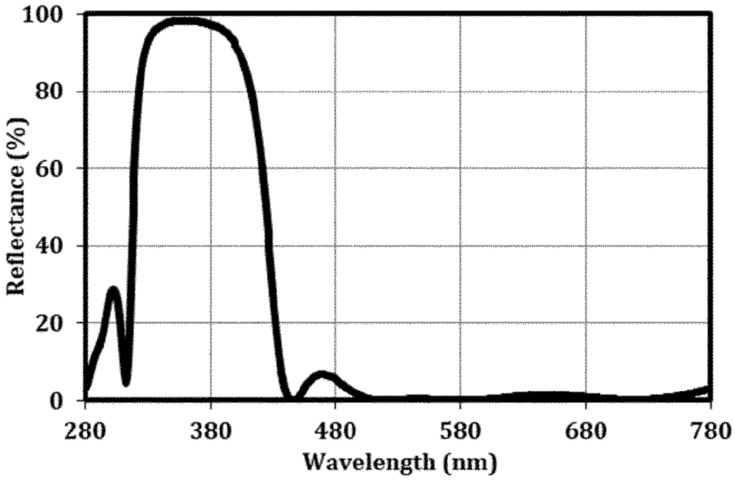

Fig.4

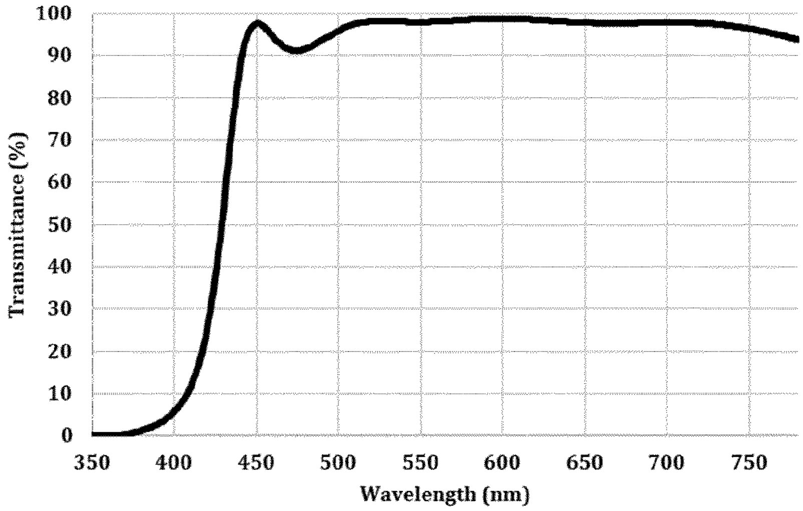


Fig.5

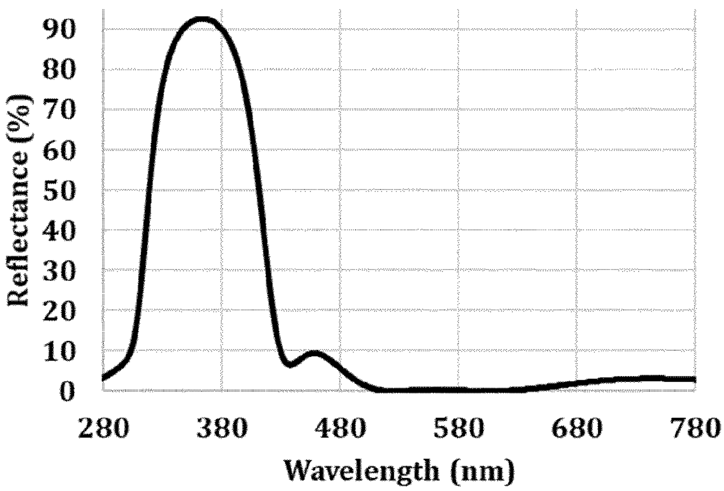


Fig.6

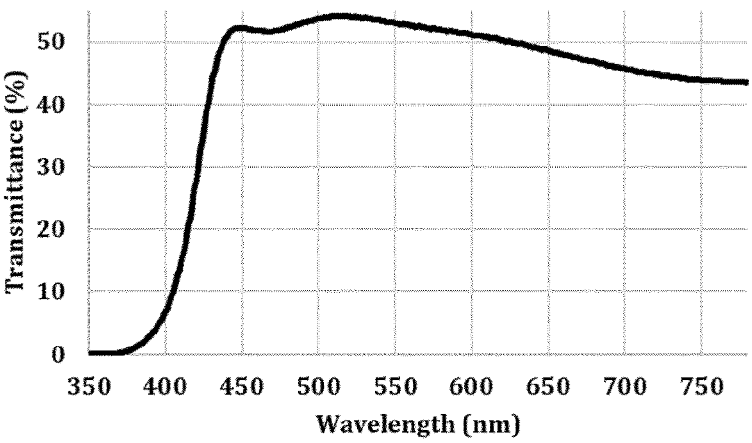

Fig.7

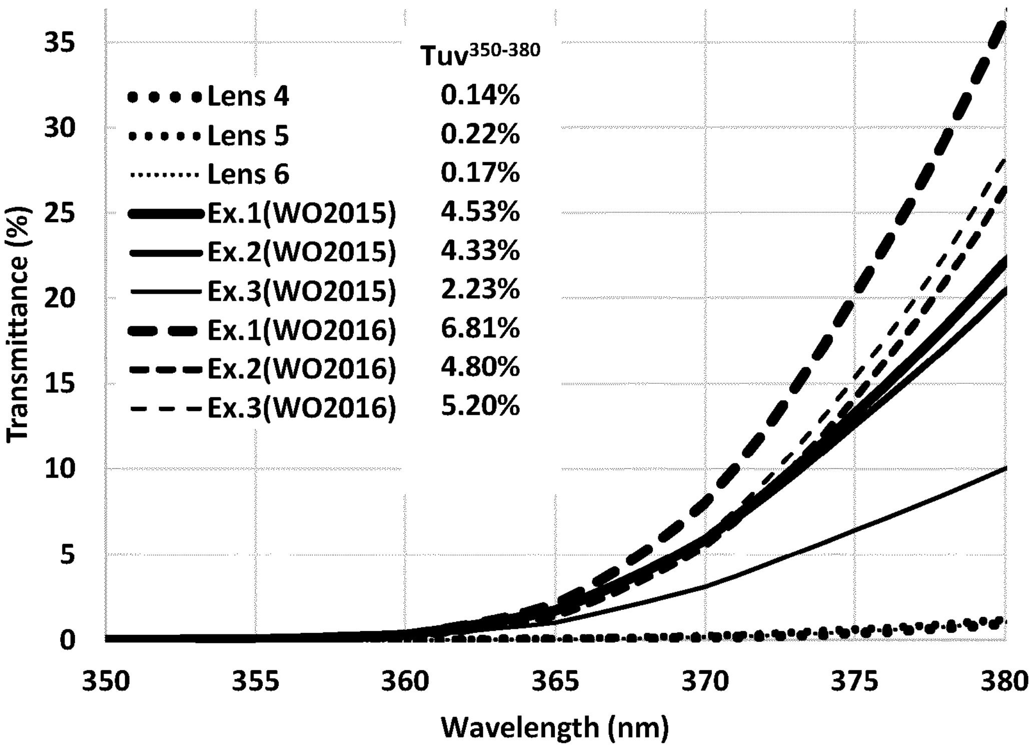
Tuv350-380
Lens 4 0.14%
Lens 5 0.22%
Lens 6 0.17%
Ex.1(WO2015) 4.53%
Ex.2(WO2015) 4.33%
Ex.3(WO2015) 2.23%
Ex.1(WO2016) 6.81%
Ex.2(WO2016) 4.80%
Ex.3(WO2016) 5.20%
Transmittance (%)
Wavelength (nm)
0
5
10
15
20
25
30
35
350
355
360
365
370
375
380

Fig.8

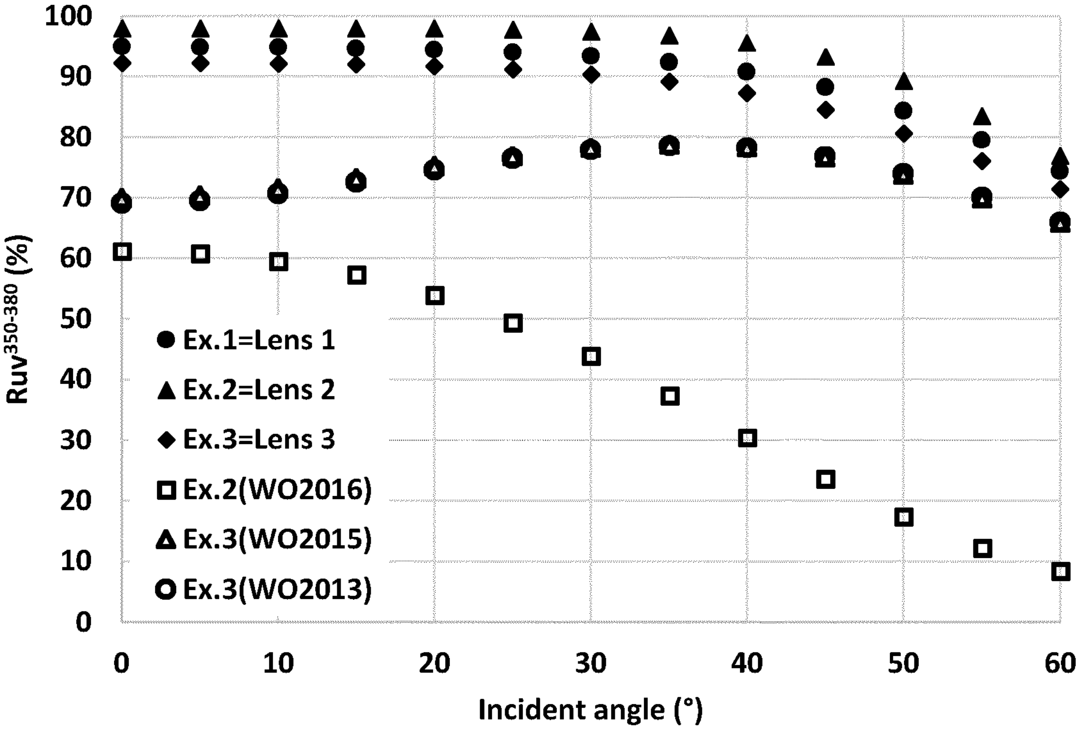
Ruv350-380 (%)
Incident angle (°)
Ex.1=Lens 1
Ex.2=Lens 2
Ex.3=Lens 3
Ex.2(WO2016)
Ex.3(WO2015)
Ex.3(WO2013)
0
10
20
30
40
50
60
70
80
90
100
0
10
20
30
40
50
60

Fig.9

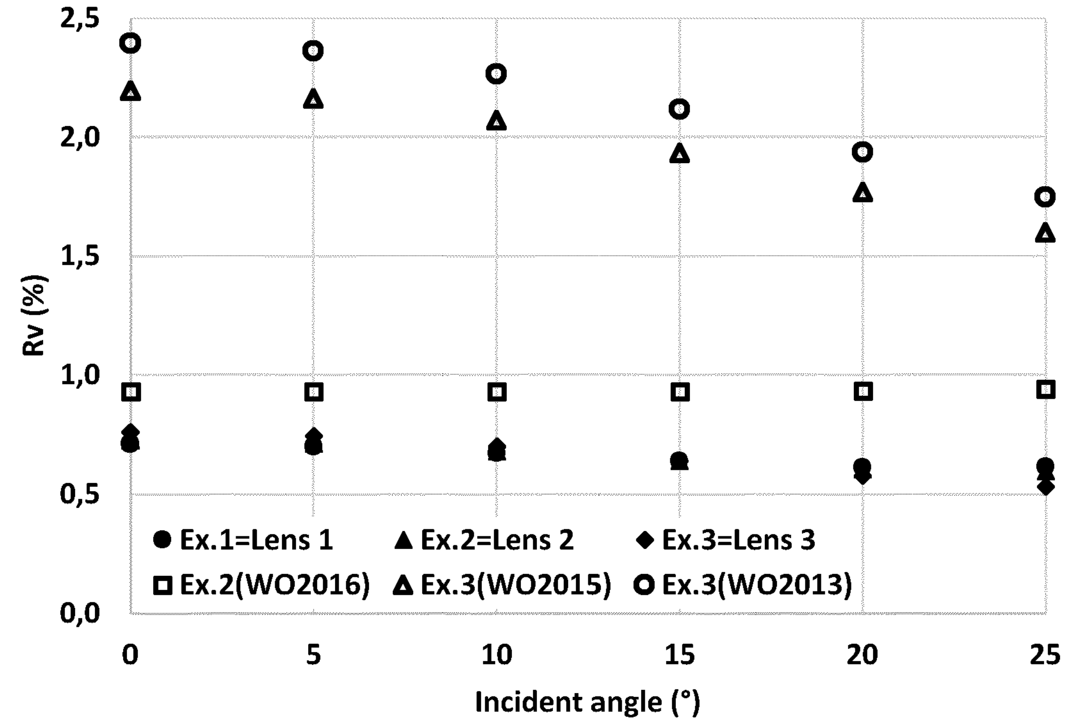
2,5
2,0
1,5
1,0
0,5
0,0
Rv (%)
0
5
10
15
20
25
Incident angle (°)
Ex.1=Lens 1
Ex.2=Lens 2
Ex.3=Lens 3
Ex.2(WO2016)
Ex.3(WO2015)
Ex.3(WO2013)

Fig.10

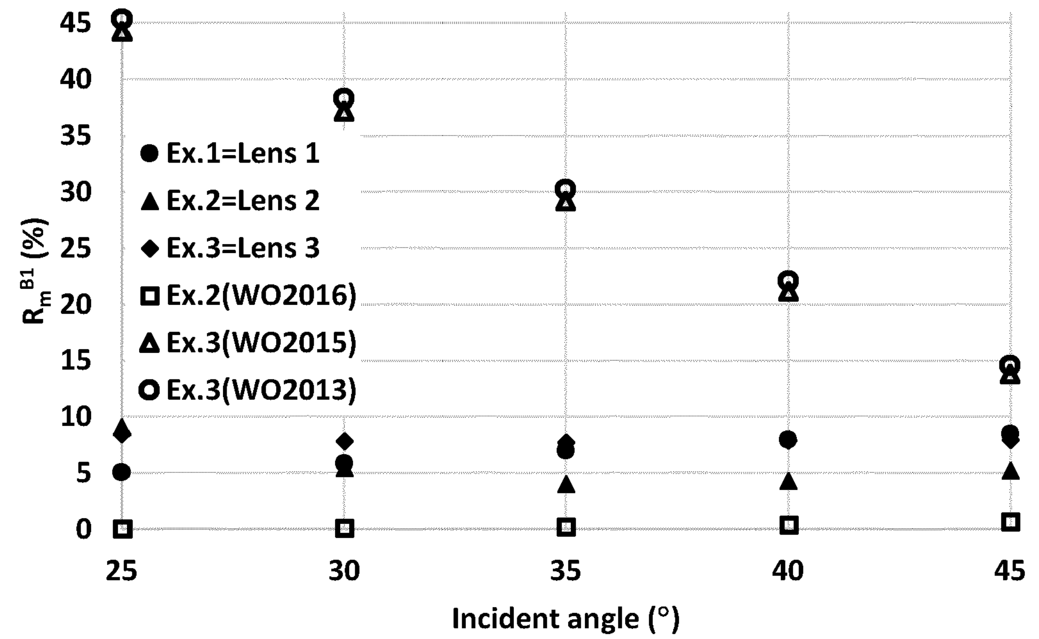
45
40
35
30
25
20
15
10
5
0
$R_m^{B1}$ (%)
25
30
35
40
45
Incident angle (°)
Ex.1=Lens 1
Ex.2=Lens 2
Ex.3=Lens 3
Ex.2(WO2016)
Ex.3(WO2015)
Ex.3(WO2013)

Europäisches Patentamt
European Patent Office
Office européen des brevets

# EUROPEAN SEARCH REPORT

Application Number
EP 23 30 6584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/351119 A1 (PASSARD DELPHINE [FR] ET AL) 7 December 2017 (2017-12-07)<br>* paragraphs [0026], [0135], [0069], [0074], [0006], [0136], [0184], [0187]; table 5 *<br>* paragraphs [0058], [0084], [0006], [0141], [0070], [0083]; figure 1; table 6 *<br>----- | 1-15 | INV.<br>G02B1/115<br>G02B5/08<br>G02B5/28 |
| Y | US 5 332 618 A (AUSTIN R RUSSEL [US]) 26 July 1994 (1994-07-26)<br>* column 6, line 40 - line 49; figure 10 *<br>----- | 1-15 | |
| | | | TECHNICAL FIELDS SEARCHED (IPC) |
| | | | G02B |

The present search report has been drawn up for all claims

1

| Place of search | Date of completion of the search | Examiner |
|---|---|---|
| Munich | 12 February 2024 | Jones, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 30 6584

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2024

| Patent document cited in search report | Publication date | Patent family member(s) | Publication date |
|---|---|---|---|
| US 2017351119 A1 | 07-12-2017 | CN 107111000 A | 29-08-2017 |
| | | EP 3237939 A1 | 01-11-2017 |
| | | FR 3031195 A1 | 01-07-2016 |
| | | US 2017351119 A1 | 07-12-2017 |
| | | WO 2016102857 A1 | 30-06-2016 |
| US 5332618 A | 26-07-1994 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- FR 2968774
- WO 2016102857 A
- WO 2015040184 A
- WO 2013171434 A
- WO 2012076714 A
- EP 2122392 A
- EP 1633684 A
- EP 1467955 A
- EP 1392613 A
- FR 2702486
- EP 0614957 A
- US 4211823 A
- US 5015523 A
- JP 63141001 A
- JP 63087223 A
- EP 0404111 A
- US 5316791 A
- EP 0680492 A
- US 5081192 A
- US 5763061 A
- US 6183872 A
- US 5739639 A
- US 5922787 A
- US 6337235 B
- US 6277485 B
- EP 0933377 A


### Non-patent literature cited in the description


- Thin Film Processes. Academic Press, 1978
- Thin Film Processes II. Academic Press, 1978